(19) Europäisches Patentamt / European Patent Office / Office européen des brevets

(11) **EP 3 044 607 B1**

(12) **FASCICULE DE BREVET EUROPEEN**

(45) Date de publication et mention de la délivrance du brevet:
**11.04.2018 Bulletin 2018/15**

(21) Numéro de dépôt: **14761657.7**

(22) Date de dépôt: **10.09.2014**

(51) Int Cl.:
*G01S 7/539* (2006.01)  *G01S 7/62* (2006.01)
*G01S 15/42* (2006.01)  *G01S 15/87* (2006.01)
*G01S 15/88* (2006.01)  *G01S 15/89* (2006.01)
*B63G 7/00* (2006.01)  *B63C 11/48* (2006.01)
*G10K 11/35* (2006.01)

(86) Numéro de dépôt international:
**PCT/EP2014/069256**

(87) Numéro de publication internationale:
**WO 2015/036417 (19.03.2015 Gazette 2015/11)**

(54) **SYSTEME DE DETECTION ET DE LOCALISATION D'OBJETS IMMERGES FLOTTANT ENTRE DEUX EAUX TELS QUE DES MINES A ORINS ET PROCEDE ASSOCIE**

SYSTEM ZUR ERKENNUNG UND ORTUNG VON UNTERWASSEROBJEKTEN WIE ANKERTAUMINEN UND ZUGEHÖRIGES VERFAHREN

SYSTEM FOR DETECTING AND LOCATING SUBMERGED FLOATING OBJECTS SUCH AS MOORED MINES AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2013 FR 1302141**

(43) Date de publication de la demande:
**20.07.2016 Bulletin 2016/29**

(73) Titulaire: **Thales**
**92400 Courbevoie (FR)**

(72) Inventeurs:
• **MANDELERT, Nicolas**
**F-29200 Brest (FR)**
• **GUTHMANN, Pierre**
**F-29200 Brest (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
EP-A1- 1 887 383    DE-A1- 3 219 487
US-A- 4 951 268    US-A- 5 506 812

EP 3 044 607 B1

Printed by Jouve, 75001 PARIS (FR)

**Description**

La présente invention se rapporte à un système pour détecter et localiser des objets sous-marins flottant entre deux eaux, comprenant un sonar permettant de détecter les objets sous-marins ayant renvoyé des échos sonars, c'est-à-dire ayant renvoyé des échos suite à l'émission d'une impulsion acoustique (ou ping acoustique) par le sonar.

Les mines à orin sont des mines flottant entre deux eaux en étant accrochées par un câble, dit orin, à un corps mort, appelé crapaud, reposant sur le fond de la mer. Les sonars sont montés soit sur un navire de surface, soit sur un poisson remorqué par un navire de surface soit sur un véhicule sous-marin autopropulsé.

Un des problèmes de la détection d'objets flottant entre deux eaux est de pouvoir détecter des mines sur une large fauchée de façon à surveiller une zone du milieu marin la plus grande possible en un minimum de temps. Un autre problème est de pouvoir localiser les mines détectées avec une précision suffisamment importante dans les trois dimensions de l'espace. Autrement dit, un autre problème est de réaliser un système de détection d'objets sous-marins présentant une précision de localisation suffisante dans les trois dimensions de l'espace de l'ordre de quelques mètres.

Une solution existante consiste à utiliser des sonars frontaux qui insonifient la colonne d'eau au devant du porteur et qui forment une pluralité de voies directives contigües en réception. Un inconvénient de cette solution est que pour couvrir un large fauchée perpendiculairement à l'axe du porteur et localiser des cibles sous-marines flottant entre deux eaux avec une bonne précision en gisement, des antennes de grandes dimension, encombrantes et très consommatrices en énergie électrique sont nécessaires. Cet inconvénient est incompatible avec la tendance en guerre des mines qui est d'éloigner l'homme de la menace. On recherche des solutions techniques pour monter les sonars sur des porteurs autonomes, à bord desquels une énergie limitée est accumulée, plutôt que sur des navires de type chasseurs de mines. Un autre inconvénient des sonars frontaux est qu'ils ne permettent pas de localiser les mines avec une bonne précision en site sans ajouter une antenne directive en site et qui ajoute donc de l'encombrement et de la consommation en énergie.

Une autre solution est décrite dans la demande de brevet US5506812, elle consiste à utiliser des antennes d'émission et de réception cylindriques permettant d'insonifier une zone toroïdale entourant le porteur en un seul ping acoustique, c'est-à-dire une seule impulsion acoustique. Cette solution présente les inconvénients de nécessiter une puissance d'émission élevée pour émettre une impulsion acoustique sur 360° et d'être très encombrante puisqu'elle utilise une antenne présentant 120 canaux en réception. Par ailleurs, le traitement des multiples voies en réception pour détecter des objets dans la colonne d'eau et les localiser peut s'avérer complexe.

Le document DE 3219487 divulgue un dispositif de détection comprenant un sonar à balayage mécanique fixé au sol. Le document US 4 951 268 divulgue un sonar comprenant une antenne de réception permettant de former plusieurs voies directives en gisement. Le document EP 1887 383 divulgue un sonar à antenne synthétique.

Le but de l'invention est de remédier à au moins un des inconvénients précités.

A cet effet, l'invention a pour objet un système pour détecter et localiser des objets sous-marins immergés flottant entre deux eaux comprenant au moins un sonar à balayage mécanique à une unique voie d', le sonar à balayage mécanique étant un sonar à une unique voie d'émission permettant de réaliser l'insonification d'un premier secteur élémentaire selon une première direction de pointage au moyen d'une unique première impulsion et formant une unique voie de réception apte à acquérir un premier signal acoustique résultant de ladite insonification, le sonar à balayage mécanique étant monté sur un porteur destiné à avancer selon une direction principale, de façon que la première direction de pointage soit sensiblement latérale au porteur et que le premier secteur élémentaire présente une large ouverture en gisement et une plus faible ouverture en site, le sonar à balayage comprenant un dispositif de pointage destiné à faire pivoter la direction de pointage autour d'un axe de rotation sensiblement parallèle à la direction principale permettant au sonar d'acquérir des premiers signaux acoustiques résultant d'insonifications réalisées selon des directions de pointage différentes. Le système selon l'invention comprend avantageusement une unité de calcul configurée pour localiser des objets sous-marins flottant entre deux eaux à partir de premiers signaux acoustiques.

Ce système basé sur un sonar à balayage mécanique présente l'avantage d'être peu coûteux, peu encombrant et peu consommateur en énergie comparativement à un sonar multifaisceaux (à plusieurs voies en réception) qui nécessiterait un émetteur puissant et encombrant et une antenne de réception probablement courbe d'au moins une cinquantaine de canaux. Il permet également, en le configurant judicieusement et par des traitements judicieux de détecter des objets marins et de les localiser avec une bonne précision dans les trois dimensions de l'espace de l'ordre de celle obtenue au moyen d'un sonar latéral pour la détection d'objets sous-marins posés sur le fond marin. Il permet notamment d'obtenir des mesures de position présentant une bonne précision de localisation dans les trois dimensions à partir d'un sonar présentant une mauvaise résolution horizontale puisqu'il s'agit d'un sonar à une voie en émission et en réception présentant une mauvaise résolution en gisement.

Ce système permet également de détecter des mines à orins courts (situées à une faible hauteur par rapport au fond de la mer) qui sont difficilement détectables par un sonar latéral en particulier à proximité de la portée maximale d'observation.

Avantageusement, le système comprend une unité de calcul configurée pour localiser des objets sous-marins flottant entre deux eaux à partir d'au moins un premier signal acoustique.

Dans un mode particulier de réalisation, le système comprend une pluralité de sonars à balayage mécanique espacés selon la direction principale et dont les directions orientées de pointage sont dirigées vers le même côté d'un plan vertical passant par la direction principale.

Avantageusement, le système comprend au moins un sonar latéral destiné à imager le fond marin selon une deuxième direction de pointage dans un deuxième secteur élémentaire présentant une large ouverture en gisement et une faible ouverture en site, le sonar latéral formant une pluralité de voies de réception en gisement et étant monté sur le porteur de façon que la deuxième direction de pointage soit orientée sensiblement latéralement au porteur du même côté du porteur, par rapport au plan vertical passant par la direction principale que la première direction de pointage, le système comprenant en outre une interface homme-machine comprenant un dispositif d'affichage destiné à afficher simultanément une première image sonar représentant des premiers signaux acoustiques et une deuxième image sonar représentant des deuxièmes signaux acoustiques acquis pendant une même période d'acquisition par le sonar à balayage mécanique et respectivement par le sonar latéral. L'interface homme-machine étant configurée de façon que lorsque les première et deuxième images sont affichées simultanément un opérateur puisse, lorsqu'il identifie visuellement, sur la première image, un premier écho émis par un objet immergé flottant entre deux eaux, identifier visuellement instantanément, sur la deuxième image, si un deuxième écho a été émis par un objet posé sur le fond marin sensiblement à l'aplomb de l'objet immergé.

Cette caractéristique permet à un opérateur de classifier les objets sous-marins détectés et notamment de les classifier selon que ce sont des mines à orins ou des objets libres flottant entre deux eaux. En effet, à la fois la mine et le crapaud renvoient des échos intenses qui sont représentés par des zones brillantes sur les images sonar. Si, au moment où un premier écho brillant est obtenu au moyen du sonar à balayage, un deuxième écho brillant est aussi obtenu au moyen du sonar latéral autour de la position du premier écho, il y a de fortes chances que ce deuxième écho ait été formé par un crapaud et que le premier écho ait été formé par une mine à orin. Cela permet à un opérateur de confirmer une détection d'une mine à orins dans le volume. On peut ainsi distinguer les mines à orins des objets libres tels que les bancs de poisson ou les mammifères.

Dans un mode particulier de réalisation, le dispositif d'affichage est configuré de façon que la première image et la deuxième image affichées ont des tailles sensiblement identiques et de façon qu'un écho compris dans la première image et un écho compris dans la deuxième image émis par des objets respectifs situés à une même distance du sonar à balayage mécanique et respectivement du sonar latéral et générés suite à une première et une deuxième étape d'insonification simultanées sont représentés sensiblement à une même abscisse et à une même ordonnée sur la première image et sur la deuxième image.

Dans un mode préféré de réalisation, l'interface homme-machine comprend des moyens de suivi permettant à un opérateur de déplacer simultanément deux curseurs affichés par le dispositif d'affichage, un sur la première image et l'autre sur la deuxième image, le dispositif d'affichage étant configuré de façon que les deux curseurs occupent, sur la première et la deuxième image, des positions correspondant à une même position géographique dans un référentiel terrestre.

Avantageusement, le curseur affiché sur la première image est muni d'une courbe représentant un ensemble des positions possibles sur la première image d'échos provenant d'un objet ayant émis un écho représenté à la position pointée par le curseur.

Avantageusement, lequel la première image et la deuxième image représentent les premier et deuxième signaux acoustiques en mode instant d'émission de l'impulsion acoustique à l'origine des signaux / distance séparant, dans le plan horizontal, les objets à l'origine des échos, et étant compris dans lesdits signaux, d'un point fixe par rapport auxdits sonars.

Avantageusement, le système comprend une unité de calcul apte à identifier, dans des premiers signaux, des premiers échos effectifs effectivement émis par des objets effectifs effectivement immergés flottant entre deux eaux, le dispositif d'affichage étant configuré de façon à afficher en superposition avec la première image et/ou la deuxième image, des symboles au niveau des positions effectives considérées comme étant effectivement occupées par les objets effectifs.

Avantageusement, ladite interface homme-machine comprend une unité de classification configurée de façon à permettre à un opérateur de classifier des premiers échos visibles sur la première image ou des premiers échos effectifs identifiés, par une unité de calcul dans des premiers signaux, comme étant émis par des objets effectifs effectivement immergés flottant entre deux eaux visibles, dans une première classe prise parmi une pluralité de classes comprenant une classe mine à orins et une classe objet flottant libre.

L'invention se rapporte également à un procédé de détection et de localisation d'objets sous-marins flottant entre deux eaux, utilisant un système selon l'invention, le procédé comprenant une étape de balayage lors de laquelle le sonar à balayage mécanique balaye une pluralité de fois un secteur à imager ouvert dans un plan sensiblement perpendiculaire à la direction principale, lors de laquelle le sonar à balayage mécanique réalise des étapes d'acquisition sonar successives lors desquelles le dispositif de pointage fait pointer la première direction de pointage selon des directions pointées successives comprises dans le secteur à imager, et pour chaque direction pointée, émet une première impulsion acoustique à un premier instant d'insonification et acquiert un premier signal acoustique résultant de la première impulsion acoustique.

Avantageusement, le procédé comprend une étape de détection pour détecter des premiers échos potentiels émis par des objets immergés flottant entre deux eaux au moyen de premiers signaux, comprenant des étapes de détection unitaires, chaque étape de détection unitaire comprenant une étape d'identification pour identifier des premiers échos potentiels, considérés comme ayant été émis par des objets flottant potentiels respectifs en réponse à une première impulsion acoustique, les premiers échos potentiels étant des parties de premiers signaux vérifiant un critère de sélection prédéterminé.

Avantageusement, l'étape d'identification comprend une étape de seuillage des contrastes de premiers signaux.

Avantageusement, le sonar à balayage mécanique est configuré, compte tenu de la vitesse du porteur, de façon à acquérir, lors de l'étape de balayage plus d'une fois des échos issus d'un objet ponctuel fixe dans le référentiel terrestre et se trouvant à une immersion comprise entre une immersion minimale et une immersion maximale prédéterminées, et se trouvant perpendiculairement à la direction principal dans un plan horizontal, à une distance du sonar à balayage mécanique supérieure à une portée minimale et inférieure à une portée maximale prédéterminées, le procédé comprenant une étape de localisation d'objets immergés effectifs flottant entre deux eaux à partir des premiers signaux acoustiques acquis lors de l'étape de balayage et à partir des premiers échos potentiels.

Avantageusement, le procédé comprend une étape de localisation d'objets immergés flottant entre deux eaux comprenant :

- une étape de détermination de positions potentielles des objets flottant potentiels comprenant, pour chaque premier écho potentiel, une étape de détermination d'un ensemble de positions potentielles, que l'objet potentiel correspondant est susceptible d'occuper, à partir de la position du sonar au premier instant d'émission de la première impulsion acoustique à l'origine du premier écho potentiel,

- une étape d'accumulation lors de laquelle des positions fixes dans le référentiel terrestre sont affectées de probabilités d'occupation respectives correspondant à des probabilités d'être réellement occupées par un objet, lesdites probabilités d'occupation respectives étant initialisées au début de l'étape d'accumulation et incrémentées à chaque fois que les positions fixes respectives sont déterminées comme étant des positions potentielles lors de l'étape de détermination de positions potentielles,

- une étape d'identification de positions effectives effectivement occupées par des objets immergés effectifs flottant entre deux eaux à partir de positions fixes affectées d'une probabilité d'occupation supérieure à un seuil prédéterminé.

Avantageusement, l'ensemble de positions potentielles d'un objet potentiel est un arc de cercle, de rayon égal à la distance séparant l'objet potentiel du sonar à balayage mécanique calculée à partir de la différence entre le premier instant d'émission et l'instant de réception du premier écho potentiel émis par l'objet potentiel, dont le centre est la position du sonar au premier instant d'émission et dont l'ouverture est égale à l'ouverture du premier secteur élémentaire, le premier secteur élémentaire correspondant au secteur dans lequel est émis la portion du lobe principal de la première impulsion acoustique atténuée au maximum de 3dB, ou égale à l'ouverture du premier secteur élémentaire plus une ouverture de tolérance prédéterminée.

Avantageusement, le procédé est mis en oeuvre au moyen d'un système selon l'invention, comprenant une étape d'imagerie du fond marin simultanée à l'étape de balayage, l'étape d'imagerie du fond marin consistant à imager le fond marin au moyen du sonar latéral en émettant des deuxièmes impulsions acoustiques successives à des deuxièmes instants d'insonification successifs, et en faisant l'acquisition des deuxièmes signaux acoustiques successifs issus des deuxièmes impulsions successives, le procédé comprenant en outre une étape d'affichage simultané d'une première image représentant des premiers signaux acoustiques et d'une deuxième image représentant des deuxièmes signaux acoustiques acquis pendant une même période d'acquisition par le sonar à balayage mécanique et respectivement par le sonar latéral.

Avantageusement, le procédé comprend une étape de classification par un opérateur au moyen d'une unité de classification d'au moins un premier écho visible sur la première image dans une classe prise parmi une pluralité de classes comprenant une classe mine à orins et une classe objet flottant libre.

L'invention se rapporte également à un système de détection et de localisation d'objets sous-marins immergés flottant entre deux eaux apte à mettre en oeuvre le procédé selon l'invention, comprenant une unité de calcul configurée de façon à mettre en oeuvre l'étape d'identification des premiers échos potentiels.

Avantageusement, le système comprend une unité de positionnement configurée de façon à déterminer la position du porteur en fonction du temps, dans lequel l'unité de calcul est configurée de façon à mettre en oeuvre l'étape de localisation, l'unité de positionnement ou l'unité de calcul étant configurée de façon à déterminer la position du sonar à balayage mécanique.

D'autres caractéristiques et avantages de l'invention apparaîtront à la lecture de la description détaillée qui suit, faite à titre d'exemple non limitatif et en référence aux dessins annexés dans lesquels :

- la figure 1 représente schématiquement en vue de côté un porteur équipé d'éléments d'un système de détection selon l'invention, les équipements représentés en traits pointillés sont des équipements installés à l'intérieur du porteur, des équipements déportés sont également représentés sur cette figure,
- la figure 2 représente schématiquement en vue de dessus un porteur équipé d'éléments d'un système de détection selon l'invention,
- la figure 3 représente schématiquement une coupe transversale d'un porteur équipé d'éléments d'un système de détection selon l'invention,
- la figure 4 représente un ordinogramme du procédé selon l'invention,
- la figure 5 représente sur la même coupe transversale, des directions pointées successives de l'étape de balayage,
- la figure 6 représente schématiquement les limites d'une zone du milieu marin imagée par le sonar à balayage mécanique,
- la figure 7 représente schématiquement des positions potentielles occupées par des objets émettant des premiers échos reçus par le sonar à balayage mécanique lors de deux étapes d'imagerie selon des directions pointées présentant un même angle de site,
- la figure 8 représente schématiquement des positions potentielles occupées par le premier secteur élémentaire lors d'étapes d'imagerie successives séparées par une période de balayage selon des directions pointées présentant un même angle de site,
- la figure 9 représente schématiquement un exemple d'affichage selon l'invention des représentations de premiers échos et de deuxièmes échos reçus par le sonar à balayage mécanique et respectivement par le sonar latéral.

D'une figure à l'autre, les mêmes éléments sont repérés par les mêmes références.

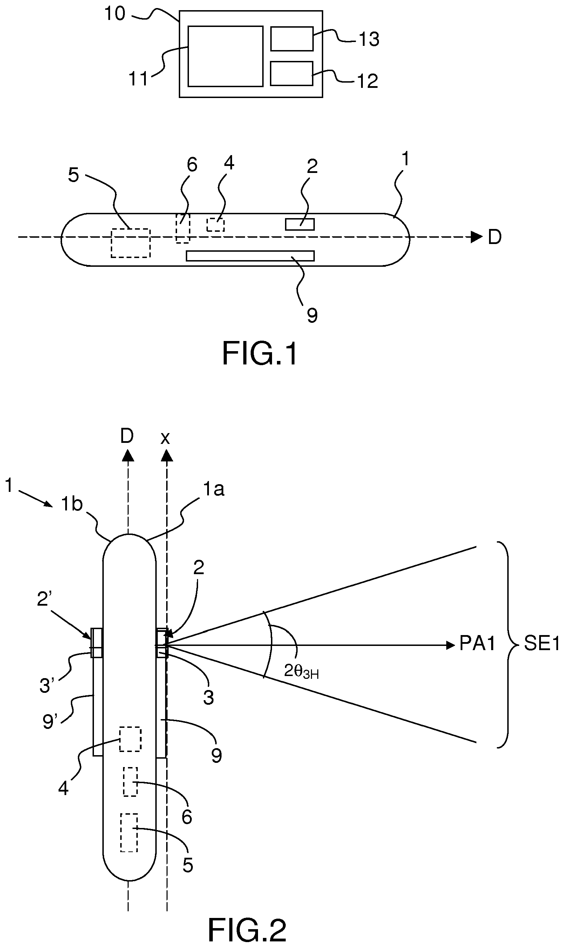

Sur la figure 1, on a représenté des éléments d'un système de détection d'objets sous-marins selon l'invention.

Le système de détection comprend un système d'imagerie comprenant un premier sonar 2, appelé sonar à balayage mécanique destiné à imager la colonne d'eau. Ce sonar à balayage mécanique 2 est monté sur un porteur 1. Le porteur 1 peut être un navire, un engin sous-marin remorqué ou autonome. Il est destiné à avancer selon une direction principale d'avancement D considérée comme étant sensiblement horizontale. La direction D est une direction orientée. La principale direction D est la direction longitudinale du porteur 1 et est orientée vers l'avant du porteur. Le porteur 1 comprend avantageusement des stabilisateurs, tels que des ailerons non représentés, permettant de maintenir la gîte du porteur constante (c'est-à-dire pour limiter le roulis) et éventuellement de limiter le lacet et le tangage de façon que l'immersion du sonar ou des sonars embarqués à bord du porteur soit constante à immersion constante du porteur lorsque la direction d'avancement est sensiblement horizontale dans le référentiel terrestre.

Le sonar à balayage mécanique 2 est un sonar à une unique voie d'émission et une unique voie de réception. Il est monté sur un des flancs du sonar. Comme visible sur la figure 2, le système de détection comprend avantageusement deux sonars à balayage mécanique 2, 2' montés sur les flancs respectifs 1a, 1b du porteur 1. Seul le sonar 2 sera décrit dans la demande de brevet, l'autre sonar 2' étant configuré et agencé de la même manière.

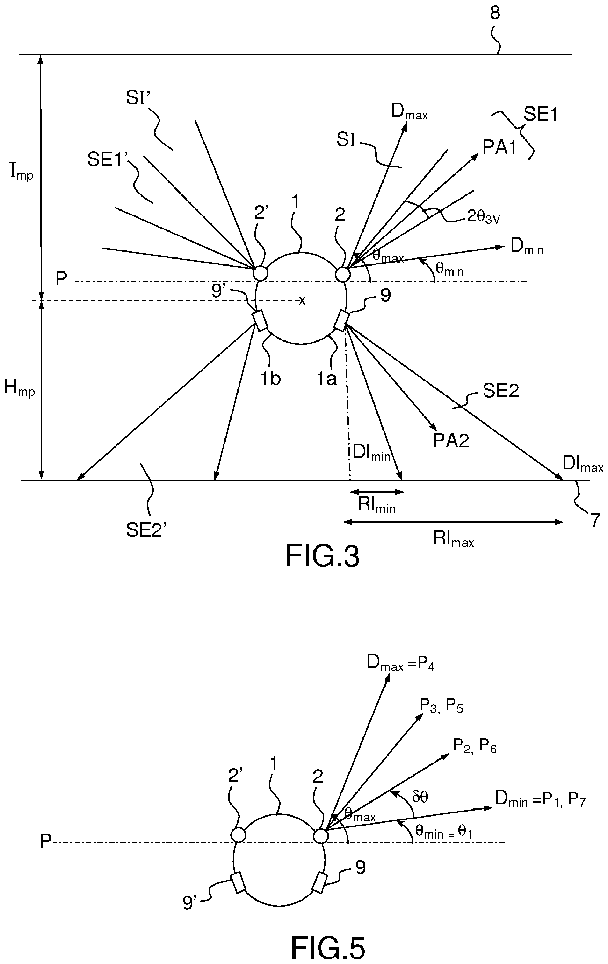

Le sonar à balayage mécanique 2 est destiné à faire une acquisition sonar d'un premier secteur élémentaire SE1 en émettant une unique première impulsion acoustique et en faisant l'acquisition des premiers signaux acoustiques ainsi obtenus. Le premier secteur élémentaire SE1 est le secteur à -3dB dans lequel est émis le lobe principal d'une l'impulsion acoustique émise par le sonar 2. On définit une première direction orientée de pointage PA1, visible sur la figure 2, correspondant à la direction selon laquelle l'énergie acoustique maximale est envoyée lorsque le sonar émet une première impulsion acoustique. Le sonar à balayage mécanique 2 est monté sur le porteur 1 de façon que la première direction de pointage PA1 soit sensiblement latérale au porteur 1. Autrement dit, la première direction de pointage PA1 s'étend dans un plan sensiblement vertical formant, dans un plan horizontal dans le référentiel terrestre, un angle non nul avec la direction principale D. Ce plan est avantageusement sensiblement perpendiculaire à la direction principale D. Le sonar à balayage mécanique 2 est également monté sur le porteur 1 de façon que le premier secteur élémentaire SE1 présente une large ouverture en gisement $2\theta_{3H}$ (dans le plan horizontal) et une faible ouverture en site $2\theta_{3v}$ (dans le plan vertical), visible sur la figure 3, de façon à obtenir la résolution angulaire désirée selon le site. La faible ouverture en site permet de limiter l'effet de la réverbération de la surface de l'eau et de localiser les objets flottant entre deux eaux avec une bonne précision. La première direction de pointage PA1 divise le premier secteur élémentaire SE1 en deux parties égales dans ces deux plans.

Le sonar à balayage mécanique 2 comprend un dispositif de pointage mécanique 3 destiné à faire pivoter la première direction de pointage PA1 autour d'un axe de rotation x sensiblement parallèle à la direction principale D. Autrement dit, le dispositif de pointage 3 permet au sonar 1 de réaliser un balayage vertical. Ce dispositif est, par exemple, un dispositif permettant de faire pivoter les antennes d'émission et de réception du sonar autour de l'axe x. Autrement dit, il fait pivoter mécaniquement la direction de pointage autour de l'axe x.

Le système selon l'invention comprend avantageusement une unité de calcul 5 permettant de localiser et éventuellement de détecter préalablement à la localisation, des objets sous-marins flottant entre deux eaux à partir d'au moins un premier signal acoustique.

Le sonar à balayage mécanique 2 est peu volumineux, et peu consommateur d'énergie électrique. Par ailleurs, les premiers signaux acoustiques obtenus au moyen de ce sonar sont faciles à traiter notamment pour procéder à la détection d'objets sous-marins, et à leur localisation. Il permet, en le configurant et en traitant les signaux acoustiques obtenus de manière judicieuse, de localiser de façon précise et peu complexe les objets sous-marins détectés dans les trois directions de l'espace sur une fauchée comparable à celle d'un sonar latéral.

Avantageusement, le système selon l'invention comprend une pluralité de sonars à balayage mécanique espacés selon la direction principale et dont les directions orientées de pointage sont dirigées vers un même côté du porteur, c'est-à-dire du même côté d'un plan vertical passant par la direction principale D. Les directions pointées par les sonars adjacents à un instant donné sont décalés d'un angle approprié. Elles sont par exemple décalées de la moitié de l'ouverture angulaire du secteur à imager de sorte que chaque sonar ne balaye que la moitié du secteur à imager ou bien décalées de la moitié du pas de balayage. Le pas de balayage et le secteur à imager sont définis ultérieurement. L'unité de calcul 5 est alors configurée pour localiser et éventuellement détecter des objets sous-marins flottant entre deux eaux à partir d'au moins un premier signal acoustique d'au moins un sonar à balayage. Cette configuration permet, pour une même résolution spatiale, d'augmenter la vitesse maximale du porteur, et/ou d'augmenter la résolution verticale du système de détection des mines à orin, et/ou d'affiner la directivité dans le plan vertical afin d'améliorer la performance en détection en particulier dans les directions proches des interfaces (surface, fond) et de localisation dans le plan vertical tout en gardant une vitesse de balayage compatible d'un nombre minimum de coups au but (> 3), et/ou d'augmenter la vitesse de balayage afin de multiplier le nombre de coups au but, et/ou d'augmenter la largeur du secteur vertical couvert.

L'invention se rapporte également à un procédé de détection d'objets dans le volume d'eau, c'est-à-dire d'objets sous-marins flottant entre deux eaux.

Ce procédé comprend une étape de balayage 20 lors de laquelle le sonar à balayage mécanique 2 balaye, une pluralité de fois, un secteur à imager SI ouvert en site, c'est-à-dire dans un plan perpendiculaire à la direction principale D. Ce secteur à imager SI est délimité par une direction minimale $D_{min}$ et une direction maximale $D_{max}$ présentant respectivement un angle de site minimal $\theta_{min}$ et un angle de site maximal $\theta_{max}$ supérieur à l'angle de site minimal. Les angles de site sont définis par rapport au plan horizontal P passant par le sonar 2 représenté en traits mixtes sur la figure 3, l'angle de site d'une direction orientée étant compté positivement lorsqu'elle est dirigée vers un point situé au-dessus du plan horizontal P.

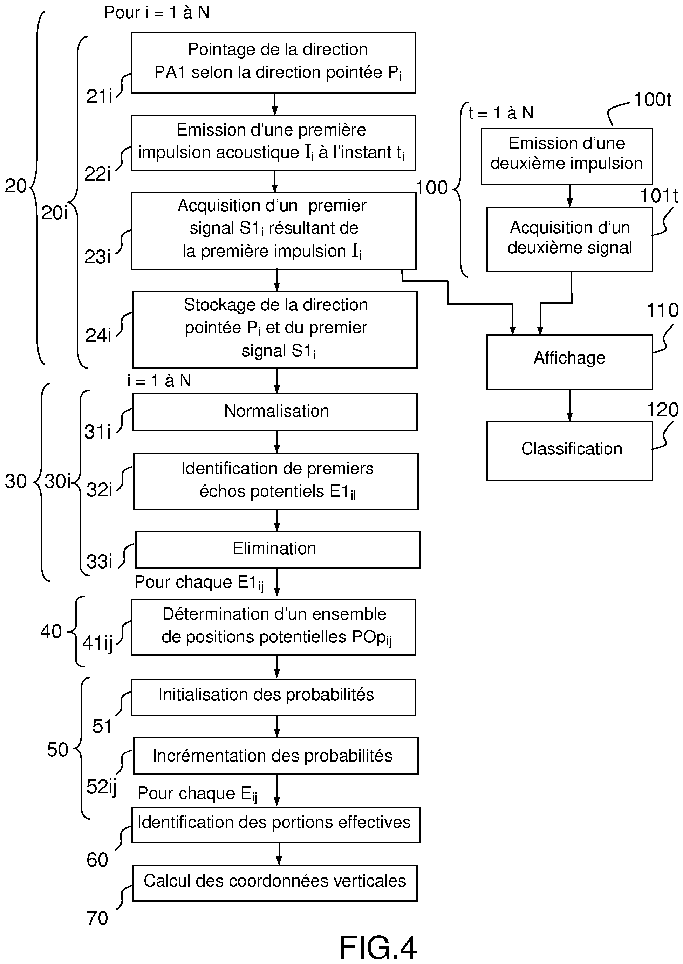

Comme visible sur les figures 4 et 5, lors de l'étape de balayage 20, le sonar à balayage mécanique 2 réalise des étapes d'acquisition sonar successives 20i, d'indice i avec i= 1 à N (où N est le nombre d'étapes d'acquisition sonar réalisées lors de l'étape de balayage égal à 7 sur la figure 5), lors desquelles le dispositif de pointage 3 fait pointer la première direction de pointage PA1 selon des directions pointées $P_i$ respectives d'indice ou de numéro d'ordre i. Les directions $P_i$ sont comprises dans le secteur à imager SI et présentent des angles de sites d'indice respectifs $\theta_i$ en faisant pivoter la première direction de pointage PA1 autour de l'axe de rotation x. Lors de chaque étape d'acquisition sonar 20i, le dispositif de pointage 3 fait pointer lors d'une étape 21i la première direction de pointage PA1 selon une direction pointée $P_i$, insonifie lors d'une étape 22i le premier secteur élémentaire SE1, c'est-à-dire émet une première impulsion acoustique $I_i$ à un premier instant d'insonification $t_i$ et acquiert 23i un premier signal acoustique $s1_i$ correspondant à une intensité acoustique en fonction du temps. Le procédé comprend également une étape de stockage 24i dans une mémoire 4, du premier signal acoustique $s1_i$ et de l'instant d'insonification $t_i$.

Le fait de faire pointer le sonar à balayage mécanique 2 latéralement au porteur 1 et de lui faire réaliser un balayage vertical (par rotation de la direction de pointage autour d'un axe de rotation sensiblement parallèle à l'axe de l'engin sous-marin), permet de détecter des objets sous-marins flottant entre deux eaux sur une fauchée comparable à celle d'un sonar latéral imageant le fond marin pouvant aller de 20 à 300 mètres.

Le fait que le sonar à balayage mécanique pointe latéralement permet d'obtenir des images latéralement par rapport à la direction du porteur. De cette façon, la détection d'objets dans la colonne d'eau tels que les mines à orins peut être réalisée simultanément à l'imagerie du fond marin, par un sonar latéral, à l'aplomb de la zone imagée par le sonar à balayage mécanique. Il est par conséquent possible d'imager de façon rapide une large zone à la fois le fond marin et la colonne d'eau sans avoir à passer plusieurs fois au même endroit.

Les directions pointées successives $P_i$ sont choisies de façon à insonifier totalement le secteur à imager SI, c'est-à-dire de façon que le premier secteur élémentaire SE1 couvre des zones successives contigües, l'ensemble des zones contigües formant le secteur à imager. Autrement dit, l'angle $\theta$ formé entre deux directions pointées consécutives est avantageusement sensiblement égal ou inférieur à $2\theta_{3H}$ et de préférence inférieur à $2\theta_{3H}$ /2.

Le balayage est avantageusement réalisé, comme représenté sur la figure 5, où N= 7 en faisant des allers et retours consécutifs du secteur à imager SI, c'est-à-dire en balayant le secteur à imager alternativement dans un premier sens puis dans un deuxième sens opposé au premier sens. Avantageusement, le balayage est réalisé à vitesse constante (c'est-à-dire que la durée pour passer d'une direction pointée à la suivante est constante) et avec un pas constant, appelé pas de balayage $\delta\theta$, entre deux directions pointées consécutives.

Le balayage en allers et retours permet d'avoir une probabilité importante d'imager plus d'une fois un objet fixe lors du déplacement du porteur et permet également de réaliser une imagerie rapide d'une zone à imager. Une période de balayage est donc la durée nécessaire pour faire un aller-retour, c'est-à-dire la durée nécessaire pour balayer une fois le secteur à imager SI en partant d'une direction pointée présentant un angle de site et en revenant à une direction pointée présentant le même angle de site. On pourrait, de façon moins avantageuse, balayer le secteur à imager uniquement dans un sens en partant de la direction minimale (ou maximale), en faisant pointer la première direction de pointage selon des directions pointées consécutives au sein du secteur jusqu'à la direction maximale (ou minimale), en revenant à la direction initiale et en reprenant le balayage dans le même sens.

Le porteur 1 se déplace tout au long de l'étape de balayage par rapport au référentiel terrestre. Il suit une trajectoire sensiblement rectiligne et de préférence uniforme à une vitesse sensiblement constante et à altitude sensiblement constante Hmp par rapport au fond marin 7.

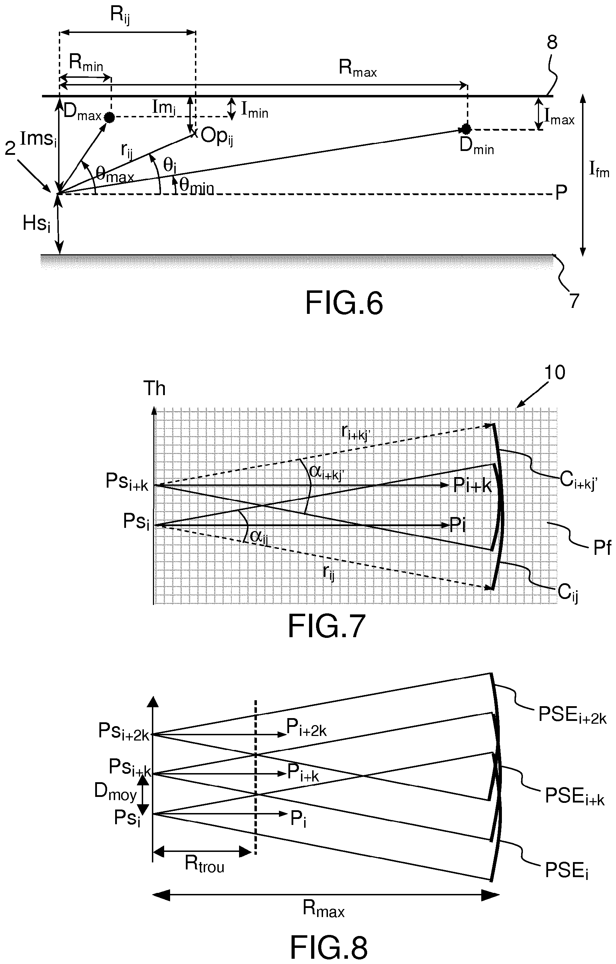

Comme visible sur la figure 6, les angles de site minimal $\theta_{min}$ et maximal $\theta_{max}$ sont définis de façon à imager une colonne d'eau s'étendant horizontalement et transversalement (c'est-à-dire perpendiculairement à la direction principale D) entre une portée minimale $R_{min}$ (définie par la direction $D_{max}$) et une portée maximale $R_{max}$ (définie par la direction $D_{min}$) prédéfinies et, verticalement, entre une immersion minimale $I_{min}$ et une immersion maximale $I_{max}$ prédéfinies. L'immersion d'un objet est la distance verticale séparant cet objet du niveau de la surface de l'eau. L'angle de site minimal $\theta_{min}$ et l'angle de site maximal $\theta_{max}$ dépendent de l'immersion $Ims_i$ du sonar à balayage mécanique 2 à altitude $HS_i$ par rapport au fond marin 7 constante, et également de $R_{min}$, $R_{max}$, $I_{min}$ et $I_{max}$. L'immersion maximale $I_{max}$ est choisie de façon à être inférieure à l'immersion $I_{fm}$ du fond marin et l'immersion minimale doit être supérieure à 0 pour être en dessous de la surface de l'eau 8. Les directions $D_{min}$ et $D_{max}$ peuvent présenter des angles de site $\theta_{min}$ et $\theta_{max}$ positifs ou négatifs, la condition étant que pour l'immersion du sonar 2, le volume imagé lorsque la direction de pointage pointe selon ces directions dans le volume défini entre $R_{min}$ et $R_{max}$, $I_{min}$ et $I_{max}$ soit un volume d'eau et non le fond marin. Autrement dit, entre les distances de portée minimale et maximale et les immersions minimale et maximale, le sonar 2 image le volume d'eau dans lequel il est plongé. Sur la réalisation des figures 3 et 6, les angles de site sont positifs, les directions pointées sont toujours pointées vers le haut.

L'unité de calcul 5 est embarquée à bord du porteur 1. Cette unité de calcul 5 peut comprendre un ou plusieurs calculateurs ou être une fonction de calcul d'un calculateur. Elle peut en variante être partiellement déportée en dehors du porteur, par exemple, sur un navire, au sol ou à bord d'un aéronef, et partiellement à bord du porteur. Elle peut également être entièrement déportée.

L'unité de calcul 5 est avantageusement configurée de façon à calculer les angles minimal et maximal $\theta_{min}$, $\theta_{max}$ pendant la mission, par exemple à intervalles de temps réguliers en fonction de l'immersion Imp du porteur 1, de la position du sonar 2 sur le porteur, et éventuellement en fonction de son attitude, notamment de sa gîte. L'immersion du porteur Imp est avantageusement fournie à l'unité de calcul par une unité de positionnement 6 configurée de façon à déterminer la position et éventuellement l'attitude du porteur 1 à intervalles de temps réguliers, par exemple, aux premiers instants d'insonification successifs et à les fournir à l'unité de calcul 5. En d'autres termes l'unité de positionnement 6 est configurée de façon à fournir à l'unité de calcul 5 la trajectoire spatio-temporelle du porteur 1 et éventuellement son attitude en fonction du temps. Il peut s'agir d'un dispositif de positionnement acoustique et/ou inertiel ou de tout autre type de dispositif de positionnement. Ce dispositif est avantageusement embarqué à bord du porteur 1.

L'unité de calcul 5 fournit ces angles $\theta_{min}$, $\theta_{max}$ au sonar à balayage 2 ainsi qu'éventuellement une vitesse de balayage, un pas angulaire de balayage $\delta\theta$ et un mode de balayage (allers retour ou allers simples, par exemple). En variante, l'immersion du porteur 1 est supposée prédéfinie et ces données sont fournies au sonar 2 avant la mission, notamment les angles $\theta_{min}$, $\theta_{max}$ sont calculés avant la mission.

Dans un mode de réalisation, le procédé comprend une étape de détection 30, réalisée par l'unité de calcul, consistant à détecter des premiers échos potentiels ayant été émis par des objets flottant entre deux eaux potentiels au moyen des premiers signaux. Cette étape comprend des étapes de détection unitaires 30i à partir des premiers signaux s1$_i$ respectifs. Une étape de détection unitaire 30i associée à une étape d'acquisition sonar 20i consiste à déterminer des premiers échos potentiels E1$_{ij}$ considérés comme ayant été émis par des objets flottant potentiels Op$_{ij}$ d'indices i et j avec j= 1 à Mi où Mi est le nombre d'objets potentiels détectés pour l'étape d'acquisition sonar 20i, à partir du premier signal acoustique s1$_i$ acquis par le sonar 2 lors de l'étape d'acquisition sonar 20i de même indice. Un premier objet potentiel Op$_{ij}$ est considéré avoir émis un premier écho lorsque ce dernier vérifie un critère de sélection prédéfini. Autrement dit, un premier écho potentiel est une partie du premier signal acoustique vérifiant un critère de sélection prédéterminé.

L'étape de détection unitaire 30i comprend avantageusement une étape d'identification 32i lors de laquelle on identifie, par une méthode de seuillage du contraste du premier signal, des premiers échos potentiels E1$_{il}$ l= 1 à L compris dans le premier signal et présentant un contraste, c'est-à-dire un rapport signal sur bruit, supérieur à un seuil de contraste prédéterminé, où L est le nombre d'échos présentant un contraste supérieur au seuil de contraste.

Ce seuil de contraste peut être fixe. Il peut être fonction de la durée séparant l'instant d'émission de l'impulsion acoustique et l'instant de réception sur le premier signal, c'est-à-dire être fonction de la distance séparant un écho du sonar.

Le seuil de contraste peut être calculé dynamiquement pour obtenir un taux de fausses alarmes constant, c'est-à-dire un taux constant de détections d'objets potentiels qui ne sont pas des objets réels par rapport aux détections d'objets potentiels qui sont des objets réels. On peut, par exemple, fixer le seuil de détection pour obtenir en moyenne une densité constante de détection sur toute la fauchée.

L'étape d'identification 32i est éventuellement précédée d'une étape de normalisation 31i de l'intensité du premier signal s1$_i$ en fonction de la durée séparant l'instant d'émission de l'impulsion acoustique et l'instant de réception pour permettre l'application d'un seuil de contraste constant.

L'étape de détection unitaire 30i comprend avantageusement une étape d'élimination 33i, lors de laquelle on élimine les premiers échos potentiels E1$_{il}$ émis par des objets potentiels Op$_{il}$ issus de la réverbération de surface et/ou des objets potentiels issus du fond marin et/ou des objets potentiels situés en dehors de la zone d'intérêt comprise entre les portées minimales et maximale R$_{min}$, R$_{max}$. Dans ce cas le critère de sélection est un double critère de position et d'intensité (ou de contraste). On obtient alors des premiers échos potentiels E1$_{ij}$.

L'étape d'élimination 33i consiste, par exemple, à éliminer les premiers échos potentiels E1$_{il}$ situés à une distance du sonar à balayage mécanique 2 non comprise dans un intervalle de distance. L'étape d'élimination utilise l'angle de site de la direction pointée P$_i$ lors de l'étape d'insonification 22i et l'instant d'insonification 22i et de l'instant de réception du premier écho potentiel associé E1$_{il}$ ainsi que l'immersion du sonar 2. L'intervalle de distances est avantageusement l'intervalle de distances en dehors duquel les objets potentiels détectés sont situés à une immersion supérieure à l'immersion maximale I$_{max}$ ou à une immersion inférieure à l'immersion minimale I$_{min}$ et/ou à une distance horizontale du sonar inférieure à la portée minimale R$_{min}$ ou supérieure à la portée maximale R$_{max}$. Le procédé selon l'invention permet donc de rejeter de façon très simple les objets potentiels issus de la réverbération de la surface ou du fond lorsque la direction de pointage est dirigée respectivement vers la surface ou vers le fond.

A l'issue de l'étape de détection unitaire 30i, une incertitude subsiste sur la position des objets potentiels Op$_{ij}$ du fait de l'ouverture en gisement du secteur élémentaire. On sait calculer la distance oblique r$_{ij}$ (c'est à dire la distance) séparant l'objet potentiel Op$_{ij}$ et le sonar 2 , la distance horizontale R$_{ij}$ séparant l'objet du sonar (à partir de l'angle de site $\theta_i$ de la direction pointée P$_i$ au moment de l'insonification 22i, de la distance oblique r$_{ij}$ et éventuellement de l'attitude du porteur si elle n'est pas fixe), ainsi que son immersion Im$_{ij}$ (à partir de l'angle de site $\theta_i$, de la direction pointée P$_i$ à l'instant t$_i$ de l'insonification 22i, de l'immersion Ims$_i$ du porteur à l'instant d'insonification et éventuellement à partir de son attitude).

L'immersion Im$_{ij}$ de l'objet est donnée par la formule suivante :

$$Im_{ij} = Im - r_{ij} \sin (\theta_{ij}) \qquad [1]$$

La distance horizontale R$_{ij}$ est donnée par la formule suivante :

$$R_{ij} = \sin (\theta_{ij}) * r_{ij} \qquad [2]$$

En revanche, il n'est pas possible de connaitre précisément la position de l'objet potentiel dans le plan horizontal. Cet objet peut occuper un ensemble de positions potentielles correspondant à un arc de cercle dont le centre est la position du sonar 2 à l'instant d'émission de l'impulsion acoustique et dont le rayon est la distance oblique r$_{ij}$. Cela est représenté sur la figure 7. Sur cette figure, on a représenté la trajectoire du sonar 2, les positions Ps$_i$, Ps$_{i+k}$ du porteur 1 aux premiers instants d'insonification d'indices i et i+k qui sont les instants d'insonification successifs selon des directions pointées présentant un même angle de site et séparés d'une période de balayage. L'ensemble de positions potentiellement occupées par un objet potentiel O$_{pij}$, O$_{pi+kj}$, ayant généré un premier écho issu de l'étape d'insonification 22i , respectivement 22i+k et étant situé à la distance oblique r$_{ij}$, respectivement r$_{i+kj}$, du porteur est un arc de cercle C$_{ij}$, respectivement C$_{j+kj}$, de rayon r$_{ij}$, respectivement r$_{i+kj}$, dont le centre est la position Ps$_i$, respectivement Ps$_{i+k}$ et symétrique par rapport au plan vertical dans lequel se trouve la direction de pointée Pi, Pi+k. Sur la réalisation de la figure 7, les ouvertures angulaires de ces arcs de cercle $\alpha_{ij}$, et respectivement $\alpha_{i+kj}$, égale à $2\theta_{3H}$. Nous verrons que les ouvertures angulaires peuvent être plus grandes que $2\theta_{3H}$.

Un autre inconvénient est que les détections peuvent présenter un nombre non négligeable de fausses alarmes.

Avantageusement, le balayage est réalisé de façon à imager plus d'une fois un objet ponctuel fixe dans le référentiel terrestre et se trouvant, perpendiculairement à la direction D, à une distance horizontale du sonar au moins égale la portée minimale R$_{min}$ et inférieure à la portée maximale R$_{max}$ du sonar 2 et entre les immersions minimale I$_{min}$ et maximale I$_{max}$, lorsque le porteur avance à une vitesse V$_{moy}$ prédéterminée selon un mouvement rectiligne. On dit que le système est configuré de façon à réaliser plusieurs coups au but. On acquiert ainsi plusieurs premiers échos provenant de l'objet lors de l'étape de balayage et on utilise ces échos pour localiser des objets effectifs flottant effectivement entre deux eaux à partir des premiers échos potentiels émis par les objets potentiels. Cette caractéristique permet de limiter les chances de ne pas détecter une cible.

Autrement dit, la vitesse de balayage, l'angle de balayage θ et le secteur à imager sont choisis de façon à imager plus d'une fois un objet situé dans l'espace défini par $R_{min}$, $R_{max}$, $I_{min}$, $I_{max}$ au moyen du premier secteur élémentaire SE1 à -3dB du sonar pendant l'étape de balayage.

Cela peut être réalisé en configurant le système sonar de façon qu'un objet fixe dans le référentiel terrestre et se trouvant, perpendiculairement à la direction D, à une distance au moins égale à une minimale de recouvrement, se retrouve plus d'une fois au sein du secteur élémentaire SE1 pendant une étape d'imagerie, lorsque le porteur avance à une vitesse $v_{moy}$.

Sur la figure 8, on a représenté différemment des positions différentes $PSE1_i$, $PSE1_{i+k}$, $PSE1_{i+2k}$ occupées par le premier secteur élémentaire SE1 ainsi que les positions respectives occupées par le sonar $Ps_i$, $PS_{i+k}$, $PS_{i+2k}$, lors de trois étapes d'insonification 22i, 22i+k, 22i+2k séparées deux à deux par la période de balayage, dans lesquelles les directions pointées $P_i$, $P_{i+k}$, $P_{i+2k}$ respectives présentent le même angle de site. Autrement dit, lors de ces étapes d'insonification, le premier secteur élémentaire SE1 occupe la même position par rapport au porteur, c'est-à-dire la même orientation dans le plan vertical.

Les objets ponctuels fixes sont imagés au moins trois fois au sein du premier secteur élémentaire lorsque le sonar à balayage balaye plus d'une fois le premier secteur élémentaire à vitesse de balayage constante si ils sont situés à une distance horizontale perpendiculaire à la direction D au moins égale à une première distance seuil égale à $R_{trou}$.

$$R_{trou} = \frac{D_{moy}}{\tan\left(\frac{2\theta_{3H}}{2}\right)} \qquad [3]$$

où $2\theta_{3H}$ est l'ouverture horizontale à -3dB du diagramme d'émission du sonar à balayage 2, et où $D_{moy}$ est la distance moyenne parcourue par le porteur pendant la durée de balayage. La valeur de la distance moyenne est donnée par l'équation suivante :

$$D_{moy} = V_{moy} * T_{scan} \qquad [4]$$

Où $V_{moy}$ est la vitesse moyenne du porteur pendant l'étape de balayage et où $T_{scan}$ est la durée de balayage.

Il faut remarquer que les premiers échos reçus par le sonar à balayage mécanique 2 ne sont pas issus uniquement des objets situés à l'intérieur du premier secteur élémentaire au moment où ils sont imagés, ils peuvent également être issus d'objets situés dans le reste du lobe principal ou en dehors de ce secteur. L'impulsion acoustique présente en effet un diagramme d'émission en forme de $\sin\theta/\theta$ présentant un maximum au niveau de la direction pointée. Le sonar peut donc recevoir des échos d'objets situés au sein des lobes secondaires du signal acoustique émis. Les objets situés proches du sonar, par exemple, à une distance du sonar inférieure à $D_{trou}$ vont renvoyer un écho présentant une intensité ou un contraste important, ce qui permet de les détecter lors de l'étape de détection élémentaire par seuillage même s'ils sont situés en dehors du secteur élémentaire à -3dB. Ils vont donc aussi pouvoir être détectés plusieurs fois lors de l'avancée du sonar.

Cela veut dire que la deuxième distance seuil $R_{trou}$ peut être supérieure à la portée minimale $R_{min}$ pour que le procédé selon l'invention fonctionne ou que le rayon de l'arc de cercle retenu pour représenter l'ensemble des positions potentielles peut être un arc de cercle présentant une ouverture supérieure à l'ouverture horizontale à -3dB (ouverture en gisement de SE1) mais par exemple une ouverture égale à l'ouverture horizontale à -10dB ou à -20 dB..

Avantageusement, le balayage est réalisé de façon à réaliser au moins trois coups au but. Cela permet de garantir une certaine précision de positionnement.

Le procédé selon l'invention profite avantageusement de la pluralité de coups au but pour réduire le taux de fausses alarmes et localiser de façon précise, dans les trois dimensions de l'espace les objets potentiels.

A cet effet, le procédé comprend avantageusement, une étape de détermination de positions potentielles 40 comprenant, pour chaque premier écho potentiel $E1_{ij}$, une étape de détermination 41ij d'un ensemble de positions potentielles $POp_{ij}$ que l'objet potentiel qui a émis le premier écho potentiel est susceptible d'occuper. Ces positions potentielles sont déterminées à partir de la position du sonar 2 à l'instant d'émission de l'impulsion acoustique à l'origine dudit premier écho potentiel $E1_{ij}$. La position du sonar 2 est avantageusement calculée par l'unité de calcul 5 à partir de la position du sonar par rapport au porteur et à partir de la position du porteur. En variante l'unité de positionnement 6 fournit directement la position du sonar à l'unité de calcul 5.

Ces positions potentielles $POp_{ij}$ peuvent être des positions bidimensionnelles dans le plan horizontal. Dans ce cas, comme explicité précédemment en référence à la figure 8, l'ensemble de positions potentielles que peut occuper un objet potentiel $Op_{ij}$ est la projection, dans un plan horizontal, d'un arc de cercle $C_{ij}$ dont le centre est la position $Ps_i$, qui est symétrique par rapport au plan vertical dans lequel se trouve la direction de pointage Pi et dont le rayon est la distance oblique $r_{ij}$ séparant l'objet potentiel du sonar 2. Ces arcs de cercle $C_{ij}$ peuvent présenter une ouverture angulaire égale à l'ouverture en gisement du premier secteur élémentaire SE1 ou égale à l'ouverture en gisement du premier secteur élémentaire plus une ouverture de tolérance prédéterminée correspondant à une fraction de l'ouverture du premier secteur élémentaire de façon à tenir compte des objets détectés en dehors du premier secteur élémentaire. Comme dit précédemment, l'ouverture angulaire de l'arc de cercle peut par exemple être égale à l'ouverture horizontale à -10dB ou à -20 dB.

Le procédé comprend également une étape d'accumulation 50 lors de laquelle des positions fixes Pf dans le référentiel terrestre sont affectées de probabilités d'occupation respectives correspondant à des probabilités d'être réellement occupées par un objet. Ces probabilités sont initialisées, par exemple à 0, lors d'une étape 51 au début de l'étape d'accumulation et incrémentées 52ij à chaque fois que lesdites positions fixes sont identifiées comme étant des positions potentielles lors de l'étape de détermination des ensembles de positions potentielles 40. Les positions fixes Pf affectées de probabilités sont des cases d'une grille 10 représentée sur la figure 7.

Dans le cas où les positions potentielles sont des positions bidimensionnelles dans le plan horizontal, les positions fixes affectées de probabilités sont des cases d'une grille bidimensionnelle dont les côtés sont parallèles et perpendiculaires à la direction D.

Le procédé comprend une étape d'identification 60 de positions effectives qui sont les positions effectivement occupées par un objet parmi les positions fixes, les positions effectives étant obtenues à partir des positions fixes affectées d'une probabilité d'occupation supérieure à un seuil de probabilité prédéterminé. Cette étape permet de ne sélectionner que les objets vus suffisamment de fois. A l'issue de cette étape les objets potentiels non pertinents (pas vus suffisamment de fois par le procédé) ont été éliminés. On a notamment pu éliminer des poissons en mouvement contrairement aux mines à orins occupant des positions sensiblement fixes et d'autres fausses alarmes.

Les positions effectives correspondent aux positions bidimensionnelles qui sont affectées de la probabilité maximale dans un cercle de rayon inférieur à un seuil prédéterminé (maximum local).

Dans le cas de la figure 7, les positions fixes sont toutes soit affectées d'une probabilité égale à 1 pour les positions fixes (ou cases) sur lesquelles s'étend un arc de cercle, soit d'une probabilité égale à 0 pour les positions fixes sur lesquelles ne s'étend pas un arc de cercle, soit d'une probabilité égale à 2 uniquement pour la position fixe située à l'intersection des deux arcs de cercle.

Les incréments peuvent être fixes. En variante l'incrément est d'autant plus grand que le contraste du premier écho émis par l'objet potentiel est important. Cela permet d'accorder plus de crédit à un écho fort, c'est-à-dire avec un contraste important.

L' étape de localisation des objets comprend une étape de calcul 70 des coordonnées verticales effectivement occupées dans le plan vertical à partir angles de site des directions pointées lors des émissions des impulsions acoustiques à l'origine des premiers échos potentiels émis par les objets potentiels occupant des positions potentielles correspondant aux positions affectées de probabilités supérieures au seuil de probabilité et à partir des distances séparant les objets potentiels et le sonar à balayage mécanique. Cette valeur peut être obtenue à partir d'une moyenne ou d'une médiane des angles de site des directions pointées lors des étapes d'insonification à l'origine des premiers échos potentiels considérés.

Autrement dit, l'étape de localisation des objets comprend une étape de calcul 70 des coordonnées verticales effectivement occupées dans le plan vertical à partir des immersions des objets potentiels occupant des positions potentielles correspondant aux positions affectées de probabilités supérieures au seuil de probabilité et à partir des distances séparant les objets potentiels et le sonar. L'immersion d'un objet potentiel est définie par la formule [1]. Ce procédé décrit précédemment permet de localiser l'objet avec une bonne précision dans les trois directions de l'espace. La résolution dans la direction verticale est définie par l'ouverture en site du premier secteur élémentaire.

En variante, les positions fixes sont des positions géographiques tridimensionnelles. Il s'agit par exemple de cases d'une grille tridimensionnelle dont la hauteur correspond à l'ouverture du premier secteur élémentaire plus une éventuelle tolérance en site prédéfinie (variable en fonction de la distance horizontale séparant une case du sonar 2). Le procédé permet donc d'obtenir une résolution verticale correspondant à l'ouverture en site du premier secteur élémentaire.

Dans ce cas l'étape de localisation des objets flottant entre deux eaux correspond à l'étape de sélection 60 des positions effectives.

Avantageusement, le système selon l'invention comprend, comme visible sur la figure 1, au moins un sonar latéral 9 destiné à imager le fond marin 7 selon une deuxième direction orientée de pointage PA2 visible sur la figure 3, dans un deuxième secteur élémentaire SE2 présentant une large ouverture en gisement et une faible ouverture en site, le sonar latéral 9 formant pluralité de voies de réception en gisement et étant monté sur le porteur 1 de façon que la deuxième direction de pointage PA2 soit orientée sensiblement latéralement au porteur 1, de préférence sensiblement perpendiculairement à la direction principale D, du même côté du porteur 1 par rapport au plan vertical passant par la direction principale D que la première direction de pointage PA1. Le sonar latéral peut être un sonar latéral à antenne synthétique.

Lors d'une étape d'imagerie du fond marin 100 simultanée à l'étape de balayage 20, le sonar latéral émet, lors d'étapes 100t (avec t= 1 à N par exemple) des deuxièmes impulsions acoustiques successives à des deuxièmes instants d'insonification successifs et acquiert, lors d'étapes 101t des deuxièmes signaux acoustiques si2 successifs résultant des deuxièmes impulsions acoustiques respectives. Avantageusement, les deuxièmes instants d'insonification successifs sont les mêmes instants que les premiers instants d'insonification successifs. Autrement dit, les sonars sont synchronisés. Cela permet d'éviter que les sonars ne se polluent l'un et l'autre. Par suite, les sonars ont la même durée inter-pings et donc la même portée. Avantageusement, les bandes de fréquences d'émission des deux sonars ne se superposent pas.

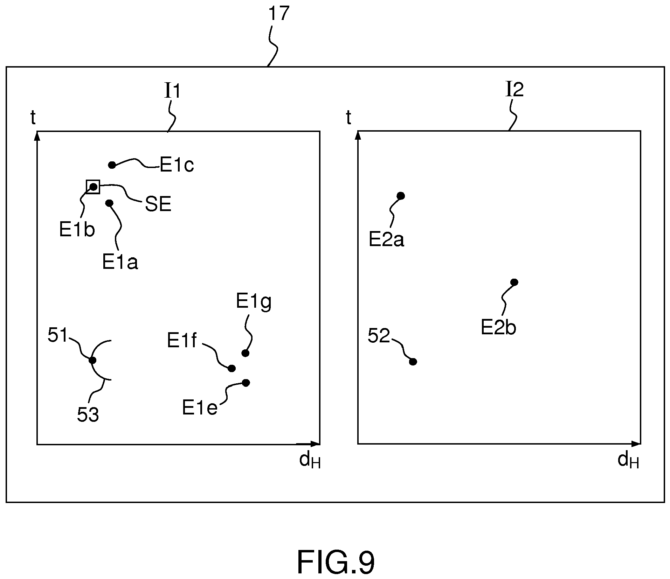

Le système comprend en outre une interface homme-machine 10, disposé, par exemple, sur un navire en surface, comprenant un dispositif d'affichage 11 destiné à afficher, dans une étape 110, simultanément, comme représenté sur la figure 9, une première image sonar I1 représentant des premiers signaux acoustiques et une deuxième image sonar I2 représentant des deuxièmes signaux acoustiques acquis pendant une même période d'acquisition par le sonar à balayage mécanique et respectivement par le sonar latéral. Autrement dit, le dispositif d'affichage comprend des moyens pour générer les images sonars à partir des premiers et deuxièmes signaux acoustiques. Les échos provenant d'objets sont visibles sur les images et présentent des intensités importantes.

L'interface homme-machine étant configurée de façon que lorsque les première et deuxième image sont affichées simultanément un opérateur puisse, lorsqu'il identifie visuellement, sur la première image, un premier écho émis par un objet immergé flottant entre deux eaux, identifier visuellement instantanément, sur la deuxième image, si un deuxième écho a été émis par un objet posé sur le fond marin sensiblement à l'aplomb de l'objet immergé.

Autrement dit, l'interface homme-machine est configurée de façon qu'un opérateur puisse localiser simultanément visuellement de façon instantannée sur les deux images, des premiers et deuxièmes échos situés sensiblement à l'aplomb l'un de l'autre. En d'autres termes, l'interface homme-machine est configurée de façon qu'un opérateur puisse localiser simultanément visuellement des premiers échos et deuxièmes échos issus sensiblement d'une même coordonnée géographique, dans un référentiel terrestre, sur les deux images. Cette caractéristique permet d'éliminer des fausses alarmes notamment en permettant à un opérateur de distinguer des premiers échos issus d'objets flottant libres tels que des poissons des mines à orins reliées à un objet posé sur le fond marin 7. Sur la réalisation de la figure 9, la première image I1 et la deuxième image I2 sont affichées simultanément. Ces images respectives I1, I2 représentent les intensités des échos compris dans les premiers et deuxièmes signaux. Le dispositif d'affichage est configuré de façon que la première image et la deuxième image affichées soient de tailles sensiblement identiques et qu'un premier écho et un deuxième écho issus d'objets situés à une même distance, c'est-à-dire distance oblique, du sonar à balayage mécanique et respectivement du sonar latéral soient représentés sensiblement à une même abscisse et qu'un premier écho et un deuxième écho générés suite à une première et respectivement à une deuxième d'impulsion simultanées soient situés à une même ordonnée sur les deux images I1 et I2. On dit que les deux images sont synchronisées géographiquement. En variante les premières images pourraient être superposées en les distinguant par deux symbologies. Les premiers et deuxièmes échos peuvent, par exemple, être représentés par deux couleurs différentes.

Avantageusement, sur la réalisation de la figure 9, la première image I1 et la deuxième image I2 comprennent des premiers échos E1a, E1b, E1c, E1e, E1f, E1g et deuxièmes échos E2a, E2b très intenses selon un même système de coordonnées. Sur la figure 9, on n'a pas représenté les échos provenant d'objets situés à l'extérieur des zones d'observation respectives des deux sonars, par exemple, issus de la réverbération de la surface de l'eau. Ces échos sont avantageusement atténués ou supprimés avant l'étape d'affichage 110. Le bruit de fond est représenté en blanc et un écho brillant sur une image sonar est ici représenté en noir. Sur cette figure, le mode d'affichage est un mode instant t d'émission de l'impulsion acoustique à l'origine de l'écho compris dans le signal acoustique (en ordonnée) / distance d (en abscisse) séparant l'objet ayant émis l'écho d'un point prédéterminé fixe par rapport aux sonars. Le point fixe est par exemple la position des sonars qui sont sensiblement au droit l'un de l'autre). Cette distance est calculée par l'unité de calcul. L'instant d'émission de l'impulsion acoustique est représentatif de la position de l'objet selon la direction principale D avec des incertitudes correspondant sensiblement aux ouvertures en gisement des secteurs élémentaires à -3dB des deux sonars.

Autrement dit, la première image I1 représente les intensités des premiers signaux acoustiques en fonction des premiers instants d'émission des premières impulsions acoustiques, en ordonnée, et, en abscisse, en fonction de la distance séparant un objet ayant émis un écho compris dans le signal du sonar à balayage mécanique, c'est-à-dire en fonction de l'instant d'acquisition. La deuxième image représente les intensités des deuxièmes signaux acoustiques en fonction des deuxièmes instants d'émission des deuxièmes impulsions acoustiques, c'est-à-dire en fonction de l'instant d'acquisition en ordonnée, et, en abscisse, en fonction de la distance séparant un objet ayant émis un écho compris dans le signal du sonar latéral. Le dispositif d'affichage est configuré de façon que les échos issus d'instants d'émission identiques soient affichés à la même ordonnée sur la fenêtre ou l'écran 17 d'affichage et l'échelle de distance et l'origine la plage de distances affichées soient les mêmes pour les deux images.

Sur la première image I1 on distingue deux triplets de premiers échos E1a, E1b, E1c successifs et E1e, E1f, E1g successifs. Ceci est dû au fait que le sonar à balayage mécanique 2 est configuré de façon à réaliser au moins trois coups au but. Un objet flottant sera donc détecté trois fois par le sonar lors de l'étape de balayage pendant le déplacement du porteur selon la direction D pendant trois étapes d'imagerie lors desquelles les directions pointées présentent un même angle de site (c'est-à-dire séparées temporellement de la période de balayage). La distance oblique séparant l'écho du sonar 2 augmente entre l'écho E1a et l'écho E1b et diminue entre l'écho E1b et l'écho E1c. Ceci est dû au fait que lors de son déplacement le porteur se rapproche de l'objet flottant fixe puis s'en éloigne. Il en est de même pour le triplet de points E1d, E1f, E1g.

Sur la deuxième image, un deuxième écho E2a est issu d'une deuxième émission simultanée à la première émission dont est issu l'écho E1b car ils sont situés sensiblement à la même ordonnée. Par ailleurs ces échos étant situés sensiblement à la même abscisse sont situés à la même distance des deux sonars 2, 9. Il y a donc de fortes chances que l'objet qui a émis les échos E1a, E1b et E1c soit une mine à orins alors qu'il n'y a pas de deuxièmes échos visibles sur la deuxième image I2 au voisinage des échos E1e, E1f, E1g. Ces premiers échos sont probablement issus d'un objet flottant libre. Il en est de même pour l'écho E2b qui, n'ayant pas dans son voisinage de premier écho correspondant, est probablement issu d'un objet posé sur le sol.

L'affichage tel que décrit précédemment permet donc à un opérateur de classer des échos ou de confirmer des détections obtenues d'objets effectifs par l'unité de calcul. Avantageusement, l'interface homme-machine 10 comprend une unité de classification 12 permettant à un opérateur de classifier dans une étape 120 des premiers échos visibles sur la première image (dans le cas d'une détection manuelle), ou des premiers échos effectifs identifiés par l'unité de calcul 5 comme étant effectivement issus d'un objet immergé flottant entre deux eau (dans le cas d'une détection automatique) dans une première classe prise parmi une pluralité de classes comprenant une classe mine à orins et une classe objet flottant libre.

L'unité de calcul 5 peut aussi être configurée de façon à ne localiser que les premiers échos classés dans la classe mines à orins par l'opérateur. La localisation est alors effectuée simplement au moyen de la direction pointée pour l'acquisition de l'écho considéré et de l'instant de réception de cet écho.

Avantageusement, l'interface homme-machine comprend des moyens de suivi 13 permettant à un opérateur de déplacer simultanément un premier curseur 51 et un deuxième curseur 52. Ces curseurs sont affichés par le dispositif d'affichage. Le premier curseur 51 est affiché sur première image I1. Le deuxième curseur 52 est affiché sur la la deuxième image I2. Autrement dit les curseurs 51, 52 sont superposés aux images respectives I1 et I2. Le dispositif d'affichage est configuré de façon que les deux curseurs occupent, sur les deux images, des positions respectives correspondant à une même position géographique dans un référentiel terrestre, appelée position pointée. Autrement les coordonnées occupées par les deux curseurs sur les deux images correspondent à des positions géographiques identiques dans le référentiel terrestre. Avec ce curseur, il n'est pas obligatoire de prévoir des images de même taille comme sur la figure 9. Les moyens de suivi comprennent, par exemple, une souris, un ensemble de touche permettant à un opérateur de diriger le curseur dans des direction différentes, ou bien une zone tactile.

Avantageusement, comme visible sur la figure 9, le curseur 51 affiché sur la première image I1 est muni d'une courbe 53 calculée dynamiquement, par l'unité de calcul ou le dispositif d'affichage. La courbe 53 dépend de la position pointée par le curseur. Elle s'étend autour de la position pointée par le curseur et est configurée de sorte à représenter un ensemble des positions possibles, sur la première image, d'échos émis par un objet ayant émis un écho représenté à la position pointée par le curseur sur l'image. Ainsi, si le curseur est placé en E1b, la courbe associée passera par les points E1c et E1a. Ce curseur permet de visualiser la position attendue d'échos successifs d'un objet immobile dans le volume d'eau, et aide ainsi l'opérateur à repérer les échos possibles de contacts d'intérêt. Cette courbe est calculée approximativement comme suit :

Lorsque le curseur pointe une position présentant les coordonnées $t_i$ et $r_i$ où $t_i$ correspond à un instant d'insonification $t_i$ à l'origine d'un écho et $r_i$ une distance oblique entre un objet à l'origine de l'écho et le sonar à balayage volumique, la position $r_{i+k}$ de la courbe sur l'axe des distances située sur l'axe des temps à l'instant $t_{i+k}$ est calculée ainsi :

$$r_{i+k} = \sqrt{r_i^2 + (D_{moy} \times k)^2}$$

$r_{i-k} = r_{i+k}$. La courbe 53 est, de préférence, centrée autour de la position i le long de l'axe temporel t.

Avantageusement, comme représenté sur la figure 9, le dispositif d'affichage est configuré pour afficher en superposition de la première image et/ou de la deuxième image des symboles SE au niveau des positions effectives considérées comme étant effectivement occupées par les échos détectés par l'unité de calcul 5. Cela permet à un opérateur de se concentrer sur les zones où des premiers échos effectifs ont déjà été détectés de façon à accélérer et améliorer la pertinence de la classification. Sur la figure 9, un symbole SE correspondant à la position effective identifiée par l'unité de calcul à partir des trois premiers échos E1a, E1b, E1c est affiché uniquement sur la première image. Le symbole SE est un carré sur l'exemple non limitatif de la figure 9.

Avantageusement, comme représenté sur la figure 3, le sonar latéral est configuré de façon à imager le fond marin 7 dans une zone d'observation délimitée par une portée d'observation minimale $RI_{min}$ et une portée d'observation maximale $RI_{max}$ définies par les directions respectives $DI_{min}$ et $DI_{max}$ délimitant le deuxième secteur élémentaire SE2 correspondant aux distances horizontales perpendiculaires à la direction D proche de la hauteur d'eau entre le fond et le sonar latéral et respectivement au-delà de laquelle l'écho devient trop faible.

Avantageusement, les portées d'observation minimale et maximale $DI_{min}$ et $DI_{max}$ sont sensiblement égales aux portées minimale et maximale $R_{min}$ et $R_{max}$ du sonar à balayage mécanique 2. Cette configuration permet de réaliser la recherche de mines à orins et de mines posées sur le fond marin de façon simultanée sur une même fauchée et dans une même zone ce qui permet d'optimiser la trajectoire du porteur et donc le temps mis pour surveiller une plus large zone à surveiller.

Les sonars à balayage mécanique et latéral fonctionnent à des fréquences allant de plusieurs dizaines à plusieurs centaines de kHz pour présenter une résolution angulaire compatible avec la taille des mines. Avantageusement les première et deuxième impulsions acoustiques présentent une bande passante au moins égale à 50kHz. Cette caractéristique permet de limiter les échos issus de la réverbération de la surface de l'eau et d'augmenter le contraste des objets à détecter.

Sur la réalisation des figures, le système selon l'invention comprend deux sonars latéraux et deux sonars à balayage mécanique disposés sur les deux flancs du porteur, c'est-à-dire de part et d'autre de la direction D et configurés de façon à imager le fond marin et le milieu marin latéralement au porteur des deux côtés d'un plan vertical passant par la direction D de façon symétrique par rapport à ce plan comme représenté sur la figure 3 où on a représenté les autres premier et deuxième secteurs élémentaires SE1', SE2' émis par les autres sonars à balayage 2'et latéral 9' symétriques du sonar à balayage 2 et respectivement du sonar latéral 9 par rapport au plan vertical passant par D. On peut envisager un nombre différent de sonars latéraux et de sonars à balayage mécanique.

## Revendications

1. Système pour détecter et localiser des objets sous-marins immergés flottant entre deux eaux comprenant au moins un sonar à balayage mécanique (2) destiné à imager une colonne d'eau, le sonar à balayage mécanique (2) étant un sonar à une unique voie d'émission, permettant de réaliser l'insonification un premier secteur élémentaire (SE1) selon une première direction de pointage (PA1) au moyen d'une unique première impulsion acoustique, ledit sonar (2) formant une unique voie de réception apte acquérir un premier signal acoustique résultant de ladite insonification, le sonar à balayage mécanique (2) étant **caractérisé en ce qu'**il est monté sur un porteur (1) destiné à avancer selon une direction principale (D), de façon que la première direction de pointage (PA1) soit sensiblement latérale au porteur (1) et que le premier secteur élémentaire (SE1) présente une large ouverture en gisement et une plus faible ouverture en site, le sonar à balayage mécanique (2) comprenant un dispositif de pointage mécanique (3) destiné à faire pivoter la première direction de pointage (PA1) autour d'un axe de rotation (x) sensiblement parallèle à la direction principale (D) permettant au sonar d'acquérir des premiers signaux acoustiques résultant d'insonifications réalisées selon des directions de pointage différentes.

2. Système selon la revendication précédente, comprenant une unité de calcul (5) configurée pour localiser des objets sous-marins flottant entre deux eaux à partir d'au moins un premier signal acoustique.

3. Système selon l'une quelconque des revendications précédentes, comprenant une pluralité de sonars à balayage mécanique espacés selon la direction principale et dont les directions orientées de pointage sont dirigées vers le même côté d'un plan vertical passant par la direction principale D.

4. Système selon l'une quelconque des revendications précédentes, comprenant au moins un sonar latéral (9) destiné à imager le fond marin (7) selon une deuxième direction de pointage (PA2) dans un deuxième secteur élémentaire (SE2) présentant une large ouverture en gisement et une faible ouverture en site, le sonar latéral (9) formant une pluralité de voies de réception en gisement et étant monté sur le porteur (1) de façon que la deuxième direction de pointage (PA2) soit orientée sensiblement latéralement au porteur (1) du même côté du porteur (1) par rapport au plan vertical passant par la direction principale (D) que la première direction de pointage (PA1), le système comprenant en outre une interface homme-machine (10) comprenant un dispositif d'affichage (11) destiné à afficher simultanément une première image sonar (I1) représentant des premiers signaux acoustiques et une deuxième image sonar (I2) représentant des deuxièmes signaux acoustiques acquis pendant une même période d'acquisition par le sonar à balayage mécanique (2) et respectivement par le sonar latéral (9), l'interface homme-machine étant configurée de façon que lorsque les première et deuxième images sont affichées simultanément un opérateur puisse, lorsqu'il identifie visuellement, sur la première image, un premier écho émis par un objet immergé flottant entre deux eaux, identifier instantanément visuellement, sur la deuxième image, si un deuxième écho a été émis par un objet posé sur le fond marin sensiblement à l'aplomb de l'objet immergé.

5. Système selon la revendication précédente, dans lequel le dispositif d'affichage (11) est configuré de façon que la première image et la deuxième image affichées ont des tailles sensiblement identiques et de façon qu'un écho compris dans la première image et un écho compris dans la deuxième image émis par des objets respectifs situés à une même distance du sonar à balayage mécanique et respectivement du sonar latéral et générés suite à une première et une deuxième étape d'insonification simultanées sont représentés sensiblement à une même abscisse et à une même ordonnée sur la première image et sur la deuxième image.

6. Système selon l'une quelconque des revendications 4 à 5, dans lequel l'interface homme-machine (10) comprend des moyens de suivi permettant à un opérateur de déplacer simultanément deux curseurs affichés par le dispositif d'affichage, un sur la première image et l'autre sur la deuxième image, le dispositif d'affichage étant configuré de façon que les deux curseurs occupent, sur la première et la deuxième image, des positions correspondant à une même position géographique dans un référentiel terrestre.

7. Système selon la revendication précédente, dans lequel le curseur affiché sur la première image est muni d'une courbe (53) représentant un ensemble des positions possibles sur la première image d'échos provenant d'un objet ayant émis un écho représenté à la position pointée par le curseur.

8. Système selon l'une quelconque des revendications 4 à 7, dans lequel la première image et la deuxième image représentent les premier et deuxième signaux acoustiques en mode instant d'émission de l'impulsion acoustique à l'origine des signaux / distance séparant, dans le plan horizontal, les objets à l'origine des échos, et étant compris dans lesdits signaux, d'un point fixe par rapport auxdits sonars.

9. Système selon l'une quelconque des revendications 4 à 8, comprenant une unité de calcul (5) apte à identifier, dans des premiers signaux, des premiers échos effectifs effectivement émis par des objets effectifs effectivement immergés flottant entre deux eaux, le dispositif d'affichage (11) étant configuré de façon à afficher en superposition avec la première image et/ou la deuxième image, des symboles (SE) au niveau des positions effectives considérées comme étant effectivement occupées par les objets effectifs.

10. Système selon l'une quelconque des revendications 4 à 9, dans lequel ladite interface homme-machine (10) comprend une unité de classification (12) configurée de façon à permettre à un opérateur de classifier des premiers échos visibles sur la première image ou des premiers échos effectifs identifiés, par une unité de calcul (5), dans des premiers signaux, comme étant émis par des objets effectifs effectivement immergés flottant entre deux eaux visibles dans une première classe prise parmi une pluralité de classes comprenant une classe mine à orins et une classe objet flottant libre.

11. Procédé de détection et de localisation d'objets sous-marins flottant entre deux eaux, utilisant un système selon l'une quelconque des revendications précédentes, le procédé comprenant une étape de balayage (20) lors de laquelle le sonar à balayage mécanique (2) balaye une pluralité de fois un secteur à imager (SI) ouvert dans un plan sensiblement perpendiculaire à la direction principale (D), lors de laquelle le sonar à balayage mécanique (2) réalise des étapes d'acquisition sonar successives (20i) lors desquelles le dispositif de pointage (3) fait pointer (21i) la première direction de pointage selon des directions pointées successives comprises dans le secteur à imager (SI), et pour chaque direction pointée, émet une première impulsion acoustique (22i) à un premier instant d'insonification et acquiert (23i) un premier signal acoustique résultant de la première impulsion acoustique.

12. Procédé selon la revendication précédente, comprenant une étape de détection (30) pour détecter des premiers échos potentiels émis par des objets immergés flottant entre deux eaux au moyen de premiers signaux, comprenant des étapes de détection unitaires (30i), chaque étape de détection unitaire (30i) comprenant une étape d'identification (32i) pour identifier des premiers échos potentiels, considérés comme ayant été émis par des objets flottant potentiels respectifs en réponse à une première impulsion acoustique, les premiers échos potentiels étant des parties de premiers signaux vérifiant un critère de sélection prédéterminé.

**13.** Procédé selon la revendication précédente, dans lequel l'étape d'identification (32i) comprend une étape de seuillage des contrastes de premiers signaux.

**14.** Procédé selon l'une quelconque des revendications 12 à 13, dans lequel le sonar à balayage mécanique (2) est configuré, compte tenu de la vitesse du porteur, de façon à acquérir, lors de l'étape de balayage (20) plus d'une fois des échos issus d'un objet ponctuel fixe dans le référentiel terrestre, ledit objet ponctuel fixe se trouvant à une immersion comprise entre une immersion minimale et une immersion maximale prédéterminées, et se trouvant perpendiculairement à la direction principale D dans un plan horizontal à une distance du sonar à balayage mécanique (2) supérieure à une portée minimale et inférieure à une portée maximale prédéterminées, le procédé comprenant une étape de localisation d'objets immergés effectifs flottant entre deux eaux à partir des premiers signaux acoustiques acquis lors de l'étape de balayage et à partir des premiers échos potentiels.

**15.** Procédé selon la revendication précédente, comprenant une étape de localisation d'objets immergés flottant entre deux eaux comprenant :

- une étape de détermination (40) de positions potentielles des objets flottant potentiels comprenant, pour chaque premier écho potentiel, une étape de détermination d'un ensemble de positions potentielles (41ij), que l'objet potentiel correspondant est susceptible d'occuper, à partir de la position du sonar au premier instant d'émission de la première impulsion acoustique à l'origine du premier écho potentiel,
- une étape d'accumulation (50) lors de laquelle des positions fixes dans le référentiel terrestre sont affectées de probabilités d'occupation respectives correspondant à des probabilités d'être réellement occupées par un objet, lesdites probabilités d'occupation respectives étant initialisées (51) au début de l'étape d'accumulation (50) et incrémentées (52ij) à chaque fois que les positions fixes respectives sont déterminées comme étant des positions potentielles lors de l'étape de détermination de positions potentielles,
- une étape d'identification (60) de positions effectives effectivement occupées par des objets immergés effectifs flottant entre deux eaux à partir de positions fixes affectées d'une probabilité d'occupation supérieure à un seuil prédéterminé.

**16.** Procédé selon la revendication précédente, dans lequel l'ensemble de positions potentielles d'un objet potentiel est un arc de cercle de rayon égal à la distance séparant l'objet potentiel du sonar à balayage mécanique (2) calculée à partir de la différence entre le premier instant d'émission et l'instant de réception du premier écho potentiel émis par l'objet potentiel, dont le centre est la position du sonar au premier instant d'émission et dont l'ouverture est égale à l'ouverture du premier secteur élémentaire, le premier secteur élémentaire correspondant au secteur dans lequel est émis la portion du lobe principal de la première impulsion acoustique atténuée au maximum de 3dB, ou égale à l'ouverture du premier secteur élémentaire plus une ouverture de tolérance prédéterminée.

**17.** Procédé selon l'une quelconque des revendications 11 à 16, mis en oeuvre au moyen d'un système selon l'une quelconque des revendications 4 à 10, comprenant une étape d'imagerie du fond marin (100) simultanée à l'étape de balayage, l'étape d'imagerie du fond marin (100) consistant à imager le fond marin au moyen du sonar latéral (9) en émettant des deuxièmes impulsions acoustiques successives à des deuxièmes instants d'insonification successifs, et en faisant l'acquisition des deuxièmes signaux acoustiques successifs issus des deuxièmes impulsions successives, le procédé comprenant en outre une étape (110) d'affichage simultané d'une première image représentant des premiers signaux acoustiques et d'une deuxième image représentant des deuxièmes signaux acoustiques acquis pendant une même période d'acquisition par le sonar à balayage mécanique (2) et respectivement par le sonar latéral (9).

**18.** Procédé selon la revendication précédente, comprenant une étape de classification par un opérateur au moyen d'une unité de classification d'au moins un premier écho visible sur la première image dans une classe prise parmi une pluralité de classes comprenant une classe mine à orins et une classe objet flottant libre.

**19.** Système de détection et de localisation d'objets sous-marins immergés flottant entre deux eaux selon l'une quelconque des revendications 1 à 10 apte à mettre en oeuvre le procédé selon l'une quelconque des revendications 11 à 18, comprenant une unité de calcul (5) configurée de façon à mettre en oeuvre l'étape d'identification des premiers échos potentiels.

**20.** Système selon la revendication précédente dépendant des revendications 14 à 18, comprenant une unité de positionnement (6) configurée de façon à déterminer la position du porteur en fonction du temps, dans lequel l'unité de calcul (5) est configurée de façon à mettre en oeuvre l'étape de localisation, l'unité de positionnement ou l'unité de calcul étant configurée de façon à déterminer la position du sonar à balayage mécanique (2).

**Patentansprüche**

1. System zur Erkennung und Ortung von Unterwasserobjekten, die zwischen zwei Wassern treiben, umfassend mindestens ein Sonargerät mit mechanischer Abtastung (2), das dazu bestimmt ist, eine Wassersäule abzubilden, wobei das Sonargerät mit mechanischer Abtastung (2) ein Sonargerät mit einem einzigen Emissionsweg ist, das die Durchführung der Beschallung eines ersten Elementarbereichs (SE1) gemäß einer ersten Zeigerichtung (PA1) mittels eines einzigen ersten Schallimpulses ermöglicht, wobei das Sonargerät (2) einen einzigen Empfangsweg bildet, der in der Lage ist, ein erstes akustisches Signal zu empfangen, das aus der Beschallung resultiert, wobei das Sonargerät mit mechanischer Abtastung (2) **dadurch gekennzeichnet ist, dass** es auf einem Träger (1) montiert ist, der dazu bestimmt ist, sich gemäß einer Hauptrichtung (D) vorwärts zu bewegen, sodass die erste Zeigerichtung (PA1) im Wesentlichen seitlich vom Träger (1) ist, und dass der erste Elementarbereich (SE1) ein große Öffnung nach unten und eine kleinere Öffnung nach oben aufweist, wobei das Sonargerät mit mechanischer Abtastung (2) eine mechanische Zeigevorrichtung (3) umfasst, die dazu bestimmt ist, die erste Zeigerichtung (PA1) um eine Drehachse (x) zu schwenken, die im Wesentlichen parallel zur Hauptrichtung (D) ist, was dem Sonargerät ermöglicht, erste akustische Signale zu erfassen, die aus den durchgeführten Beschallungen gemäß den verschiedenen Zeigerichtungen resultieren.

2. System nach dem vorherigen Anspruch, umfassend eine Berechnungseinheit (5), die konfiguriert ist, um mittels mindestens eines ersten akustischen Signals Unterwasserobjekte zu orten, die zwischen zwei Wassern treiben.

3. System nach einem der vorherigen Ansprüche, umfassend eine Vielzahl von Sonargeräten mit mechanischer Abtastung, die in der Hauptrichtung beabstandet sind, und deren ausgerichtete Zeigerichtungen auf dieselbe Seite einer vertikalen Ebene, die durch die Hauptrichtung D verläuft, gerichtet werden.

4. System nach einem der vorherigen Ansprüche, umfassend mindestens ein seitliches Sonargerät (9), das dazu bestimmt ist, den Meeresboden (7) gemäß einer zweiten Zeigerichtung (PA2) in einem zweiten Elementarbereich (SE2) abzubilden, das eine große Öffnung nach unten und eine kleinere Öffnung nach oben aufweist, wobei das seitliche Sonargerät (9) eine Vielzahl von Empfangswegen nach unten bildet und so auf dem Träger (1) montiert ist, dass die zweite Zeigerichtung (PA2) im Wesentlichen seitlich zum Träger (1) auf derselben Seite des Trägers (1) in Bezug auf die vertikale Ebene, die durch die Hauptrichtung (D) verläuft, wie die erste Zeigerichtung (PA1), ausgerichtet ist, das System ferner umfassend eine Mensch-Maschine-Schnittstelle (10), die eine Anzeigevorrichtung (11) umfasst, die dazu bestimmt ist, gleichzeitig ein erstes Sonargerätbild (I1) anzuzeigen, das erste akustische Signale darstellt, und ein zweites Sonargerätbild (I2), das zweite akustische Signale darstellt, die während einer gleichen Aufnahmeperiode durch das Sonargerät mit mechanischer Abtastung (2) bzw. das seitliche Sonargerät (9) aufgenommen werden, wobei die Mensch-Maschine-Schnittstelle so konfiguriert ist, dass, wenn das erste und zweite Bild gleichzeitig angezeigt werden, ein Bediener, wenn auf dem ersten Bild ein erstes Echo, das von einem Objekt emittiert wird, das zwischen zwei Wassern treibt, visuell identifiziert wird, sofort visuell auf dem zweiten Bild identifizieren kann, ob ein zweites Echo von einem Objekt emittiert wurde, das auf dem Meeresboden im Wesentlichen senkrecht von Unterwasserobjekt ruht.

5. System nach dem vorherigen Anspruch, wobei die Anzeigevorrichtung (11) so konfiguriert ist, dass das erste und das zweite angezeigte Bild im Wesentlichen eine identische Größe haben, und dass ein Echo, das im ersten Bild enthalten ist, und ein Echo, das im zweiten Bild enthalten ist, die von den jeweiligen Objekten emittiert werden, die sich in einem gleichen Abstand von dem Sonargerät mit mechanischer Abtastung bzw. von dem seitlichen Sonargerät befinden, und infolge eines ersten und eines zweiten gleichzeitigen Beschallungsschritts erzeugt werden, im Wesentlichen auf einer gleichen Abszisse und einer gleichen Ordinaten auf dem ersten Bild und auf dem zweiten Bild dargestellt werden.

6. System nach einem der vorherigen Ansprüche 4 bis 5, wobei die Mensch-Maschine-Schnittstelle (10) Verfolgungsmittel umfasst, die einem Bediener ermöglichen, zwei Cursors, die durch die Anzeigevorrichtung angezeigt werden, gleichzeitig zu bewegen, einen auf dem ersten Bild und den anderen auf dem zweiten Bild, wobei die Anzeigevorrichtung so konfiguriert ist, dass die zwei Cursors auf dem ersten Bild und dem zweiten Bild Positionen einnehmen, die einer gleichen geografischen Position in einem terrestrischen Bezug entsprechen.

7. System nach dem vorherigen Anspruch, wobei der auf dem ersten Bild angezeigte Cursor über eine Kurve (53) verfügt, die einer Reihe von möglichen Positionen auf dem ersten Echobild entspricht, das von einem Objekt stammt, das ein Echo emittiert hat, das an der vom Cursor gezeigten Position dargestellt wird.

8. System nach einem der vorherigen Ansprüche 4 bis 7, wobei das erste Bild und das zweite Bild die ersten und zweiten akustischen Signale im Instant-Emissionsmodus des Schallimpulses am Ursprung der Signale / im Abstand darstellen, der die Objekte auf der horizontalen Ebene am Ursprung der Echos, und in den Signalen enthaltend, von einem Fixpunkt in Bezug auf die Sonargeräte trennt.

9. System nach einem der vorherigen Ansprüche 4 bis 8, umfassend eine Berechnungseinheit (5) die in der Lage ist, in den ersten Signalen erste effektive Echos zu identifizieren, die tatsächlich von effektiven Objekten emittiert werden, die tatsächlich unter Wasser zwischen zwei Wassern treiben, wobei die Anzeigevorrichtung (11) konfiguriert ist, um überlagernd mit dem ersten Bild und/oder dem zweiten Bild Symbole (SE) an der effektiven Positionen anzuzeigen, die so erachtet werden, dass sie tatsächlich von den effektiven Objekten eingenommen werden.

10. System nach einem der vorherigen Ansprüche 4 bis 9, wobei die Mensch-Maschine-Schnittstelle (10) eine Klassifizierungseinheit (12) umfasst, die konfiguriert ist, um einem Bediener zu ermöglichen, erste Echos, die auf dem ersten Bild sichtbar sind, oder erste effektive Echos, die durch eine Berechnungseinheit (5) in den ersten Signalen so identifiziert werden, dass sie von effektiven Objekten emittiert werden, die tatsächlich unter Wasser zwischen zwei Wassern treiben, in einer ersten Klasse unter einer Vielzahl von Klassen, umfassend eine Klasse Ankertaumine und eine Klasse frei treibendes Objekt, zu klassifizieren.

11. Verfahren zur Erkennung und Ortung von Unterwasserobjekten, die zwischen zwei Wassern treiben, unter Verwendung eines Systems nach einem der vorherigen Ansprüche, wobei das Verfahren einen Abtastungsschritt (20) umfasst, bei dem das Sonargerät mit mechanischer Abtastung (2) eine Vielzahl von Malen einen abzubildenden Bereich (SI) abtastet, der in einer Ebene im Wesentlichen senkrecht zur Hauptrichtung (D) offen ist, während dem das Sonargerät mit mechanischer Abtastung (2) aufeinanderfolgende Sonargerät-Aufnahmeschritte (20i) durchführt, bei denen die Zeigevorrichtung (3) die erste Zeigerichtung gemäß aufeinanderfolgender Zeigerichtungen zeigen (21i) lässt, die im abzubildenden Bereich (SI) enthalten sind, und für jede gezeigte Richtung einen ersten Schallimpuls (22i) in einem ersten Beschallungsmoment emittiert und ein erstes akustisches Signal resultierend von dem ersten Schallimpuls aufnimmt (23i).

12. Verfahren nach dem vorherigen Anspruch, umfassend einen Erkennungsschritt (30) zum Erkennen erster potenzieller Echos, die von Unterwasserobjekten emittiert werden, die zwischen zwei Wassern treiben, mittels erster Signale, umfassend einzelne Erkennungsschritte (30i), wobei jeder einzelne Erkennungsschritt (30i) einen Identifizierungsschritt (32i) umfasst, um erste potenzielle Echos zu identifizieren, die so erachtet werden, dass sie von jeweiligen, potenziell treibenden Objekten als Antwort auf einen ersten Schallimpuls emittiert wurden, wobei die ersten potenziellen Echos Teile der ersten Signale sind, die ein vorbestimmtes Kriterium verifizieren.

13. Verfahren nach dem vorherigen Anspruch, wobei der Identifizierungsschritt (32i) einen Schwellenwertbildungsschritt der Kontraste der ersten Signale umfasst.

14. Verfahren nach einem der vorherigen Ansprüche 12 bis 13, wobei das Sonargerät mit mechanischer Abtastung (2) unter Berücksichtigung der Geschwindigkeit des Trägers so konfiguriert ist, um während des Abtastungsschritts (20) mehr als einmal die Echos aufzunehmen, die von einem punktuell fixen Objekt in dem terrestrischen Bezugssystem ausgegeben werden, wobei sich das punktuell fixe Objekt auf einer Tiefe befindet, die zwischen einer vorbestimmten minimalen und maximalen Tiefe liegt, und das sich senkrecht zur Hauptrichtung D in einer horizontalen Ebene in einem Abstand von dem Sonargerät mit mechanischer Abtastung (2) größer als eine vorbestimmte minimale Reichweite und kleiner als eine vorbestimmte maximale Reichweite befindet, wobei das Verfahren einen Ortungsschritt von effektiven Unterwasserobjekten umfasst, die zwischen zwei Wassern treiben, anhand erster akustischer Signale, die während des Abtastungsschritts aufgenommen wurden und anhand erster potenzieller Echos.

15. Verfahren nach dem vorherigen Anspruch, umfassend einen Ortungsschritt von Unterwasserobjekten, die zwischen zwei Wassern treiben, umfassend:

- einen Bestimmungsschritt (40) potenzieller Positionen von potenziellen treibenden Objekten, umfassend für jedes erste potenzielle Echo einen Bestimmungsschritt einer Reihe von potenziellen Positionen (41ij), die das entsprechende potenzielle Objekt einnehmen kann, anhand der Position des Sonargeräts im ersten Emissionsmoment des ersten Schallimpulses am Ursprung des ersten potenziellen Echos,
- einen Akkumulierungsschritt (50), bei dem fixen Positionen im terrestrischen Bezugssystem jeweilige Belegungswahrscheinlichkeiten zugeordnet werden, die den Wahrscheinlichkeiten entsprechen, tatsächlich von einem Objekt eingenommen zu werden, wobei die jeweiligen Belegungswahrscheinlichkeiten zu Beginn des Akkumulierungsschritts (50) initialisiert (51) und jedes Mal erhöht (52ij) werden, wenn die jeweiligen fixen Positionen beim Bestimmungsschritt potenzieller Positionen als potenzielle Positionen bestimmt werden,
- einen Identifizierungsschritt (60) effektiver Positionen, die tatsächlich von effektiven Unterwasserobjekten eingenommen werden, die zwischen zwei Wassern treiben, anhand von fixen Positionen, denen eine höhere Belegungswahrscheinlichkeit als ein vorbestimmter Schwellenwert zugeordnet ist.

16. Verfahren nach dem vorherigen Anspruch, wobei die Reihe von potenziellen Positionen eines potenziellen Objekts ein Kreisbogen mit einem Radius gleich dem Abstand ist, der das potenzielle Objekt von dem Sonargerät mit mechanischer Abtastung (2) trennt, berechnet anhand der Differenz zwischen dem ersten Emissionsmoment und dem Empfangsmoment des ersten potenziellen Echos, das von dem potenziellen Objekt emittiert wird, dessen Zentrum die Position des Sonargerät im ersten Emissionsmoment ist und dessen Öffnung gleich der Öffnung des ersten Elementarbereichs ist, wobei der erste Elementarbereich dem Bereich entspricht, in dem der Abschnitt der Hauptstrahlungskeule des ersten Schallimpulses, der auf maximal 3dB gedämpft ist, emittiert wird, oder gleich der Öffnung des ersten Elementarbereichs plus einer Öffnung mit vorbestimmter Toleranz ist.

17. Verfahren nach einem der Ansprüche 11 bis 16, das mittels eines Systems nach einem der Ansprüche 4 bis 10 umgesetzt wird, umfassend einen Bildgebungsschritt des Meeresbodens (100) gleichzeitig mit dem Abtastungsschritt, wobei der Bildgebungsschritt des Meeresbodens (100) aus einer Bildgebung des Meeresbodens mittels des seitlichen Sonargeräts (9) besteht, in dem zweite aufeinanderfolgende akustische Impulse mit zweiten aufeinanderfolgenden Beschallungsmomenten emittiert werden und zweite aufeinanderfolgende akustische Signale, die von zweiten aufeinanderfolgenden Impulsen ausgegeben werden, aufgenommen werden, wobei das Verfahren ferner einen Schritt (110) zur gleichzeitigen Anzeige eines ersten Bilds umfasst, das erste akustische Signale darstellt, und eines zweiten Bilds, das zweite akustische Signale darstellt, die während einer gleichen Aufnahmeperiode von dem Sonargerät mit mechanischer Abtastung (2) bzw. durch das seitliche Sonargerät (9) aufgenommen werden.

18. Verfahren nach einem vorherigen Anspruch, umfassend einen Klassifizierungsschritt durch einen Bediener mittels einer Klassifizierungseinheit von mindestens einem ersten Echo, das auf dem ersten Bild sichtbar ist, in einer Klasse unter einer Vielzahl von Klassen umfassend eine Klasse Ankertauminen und einer Klasse frei treibendes Objekt.

19. System zur Erkennung und Ortung von Unterwasserobjekten, die zwischen zwei Wassern treiben, nach einem der Ansprüche 1 bis 10, das in der Lage ist, das Verfahren nach einem der Ansprüche 11 bis 18 umzusetzen, umfassend eine Berechnungseinheit (5), die konfiguriert ist, um den Identifizierungsschritt der ersten potenziellen Echos umzusetzen.

20. System nach dem vorherigen Anspruch, abhängig von den Ansprüchen 14 bis 18, umfassend eine Positionierungseinheit (6), die konfiguriert ist, um die Position des Trägers abhängig von der Zeit zu bestimmen, wobei die Berechnungseinheit (5) konfiguriert ist, um den Ortungsschritt umzusetzen, wobei die Positionierungseinheit oder die Berechnungseinheit konfiguriert ist, um die Position des Sonargeräts mit mechanischer Abtastung (2) zu bestimmen.

**Claims**

1. A system for detecting and locating submerged underwater objects floating between two bodies of water comprising at least one mechanical scanning sonar (2) intended to image a water column, the mechanical scanning sonar (2) being a sonar with a single emission channel, allowing the insonification of a first individual sector (SE1) to be performed in a first pointing direction (PA1) by means of a single first acoustic pulse, said sonar (2) forming a single reception channel capable of acquiring a first acoustic signal resulting from said insonification, the mechanical scanning sonar (2) being **characterised in that** it is mounted on a carrier (1) intended to advance in a main direction (D), so that the first pointing direction (PA1) is substantially lateral to the carrier (1) and so that the first individual sector (SE1) has a wide bearing aperture and a narrower elevation aperture, the mechanical scanning sonar (2) comprising a mechanical pointing device (3) intended to pivot the first pointing direction (PA1) about an axis of rotation (x) substantially parallel to the main direction (D), allowing the sonar to acquire first acoustic signals resulting from insonifications performed in different pointing directions.

2. The system as claimed in the preceding claim, comprising a computation unit (5) configured to locate underwater objects floating between two bodies of water from at least one first acoustic signal.

3. The system as claimed in any one of the preceding claims, comprising a plurality of mechanical scanning sonars spaced apart in the main direction and the oriented pointing directions of which are directed towards the same side of a vertical plane passing through the main direction D.

4. The system as claimed in any one of the preceding claims, comprising at least one lateral sonar (9) intended to image the seabed (7) in a second pointing direction (PA2) in a second individual sector (SE2) having a wide bearing aperture and a narrow elevation aperture, the lateral sonar (9) forming a plurality of bearing reception channels and being mounted on the carrier (1) so that the second pointing direction (PA2) is oriented substantially laterally to the carrier (1) on the same side of the carrier (1), relative to the vertical plane passing through the main direction (D), as the first pointing direction (PA1), the system further comprising a human-machine interface (10) comprising a display device (11) intended to simultaneously display a first sonar image (I1) representing first acoustic signals and a second sonar image (12) representing second acoustic signals acquired during a same acquisition period by the mechanical scanning sonar (2) and, respectively, by the lateral sonar (9), the human-machine interface being configured so that, when the first and second images are simultaneously displayed, an operator can, when, on the first image, a first echo emitted by a submerged object floating between two bodies of water is visually identified, instantaneously visually identify, on the second image, whether a second echo has been emitted by an object placed on the seabed substantially plumb with the submerged object.

5. The system as claimed in the preceding claim, wherein the display device (11) is configured so that the first image and the second image that are displayed have substantially identical sizes and so that an echo included in the first image and an echo included in the second image emitted by respective objects located at a same distance from the mechanical scanning sonar and, respectively, from the lateral sonar and generated following a first and a second simultaneous insonification step are substantially represented on a same abscissa and on a same ordinate on the first image and on the second image.

6. The system as claimed in any one of claims 4 to 5, wherein the human-machine interface (10) comprises monitoring means allowing an operator to simultaneously move two cursors displayed by the display device, one on the first image and the other on the second image, the display device being configured so that the two cursors occupy, on the first and on the second image, positions that correspond to a same geographical position in a terrestrial coordinate system.

7. The system as claimed in the preceding claim, wherein the cursor displayed on the first image is provided with a curve (53) representing a set of possible positions on the first image of echoes originating from an object having emitted an echo represented at the position pointed to by the cursor.

8. The system as claimed in any one of claims 4 to 7, wherein the first image and the second image represent the first and second acoustic signals in instant emission mode of the acoustic pulse at the source of the signals/at a distance separating, in the horizontal plane, the objects at the source of the echoes, and being included in said signals, from a fixed point relative to said sonar.

9. The system as claimed in any one of claims 4 to 8, comprising a computation unit (5) capable of identifying, in first signals, first effective echoes effectively emitted by effectively submerged effective objects floating between two bodies of water, the display device (11) being configured so as to display, superimposed with the first image and/or the second image, symbols (SE) at the effective positions considered as being effectively occupied by the effective objects.

10. The system as claimed in any one of claims 4 to 9, wherein said human-machine interface (10) comprises a classification unit (12) configured so as to allow an operator to classify first echoes visible on the first image or first effective echoes identified, by a computation unit (5), in first signals, as being emitted by effectively submerged effective objects floating between two visible bodies of water in a first class taken from among a plurality of classes comprising a moored mine class and a free-floating object class.

11. A method for detecting and locating underwater objects floating between two bodies of water, using a system as claimed in any one of the preceding claims, the method comprising a scanning step (20), during which the mechanical scanning sonar (2) performs a plurality of scans of a sector (SI) to be imaged that is open in a plane substantially perpendicular to the main direction (D), during which step the mechanical scanning sonar (2) performs successive sonar acquisition steps (20i), during which the pointing device (3) points (21i) the first pointing direction in successive pointed directions included in the sector (SI) to be imaged and, for each pointed direction, emits a first acoustic pulse (22i) at a first insonification instant and acquires (23i) a first acoustic signal resulting from the first acoustic pulse.

12. The method as claimed in the preceding claim, comprising a detection step (30) for detecting first potential echoes emitted by submerged objects floating between two bodies of water by means of first signals, comprising unitary detection steps (30i), each unitary detection step (30i) comprising an identification step (32i) for identifying first potential echoes, considered as having been emitted by respective potential floating objects in response to a first acoustic pulse, the first potential echoes being parts of first signals verifying a predetermined selection criterion.

13. The method as claimed in the preceding claim, wherein the identification step (32i) comprises a step of thresholding the contrasts of first signals.

14. The method as claimed in any one of claims 12 to 13, wherein the mechanical scanning sonar (2) is configured, taking into account the speed of the carrier, in order to acquire, during the scanning step (20) and more than once, echoes coming from a fixed one-off object in the terrestrial coordinate system, said fixed one-off object being located at a depth lying between a predetermined minimum depth and a predetermined maximum depth, and being located perpendicular to the main direction D in a plane horizontal to a distance from the mechanical scanning sonar (2) that is greater than a predetermined minimum range and is less than a predetermined maximum range, the method comprising a step of locating effective submerged objects floating between two bodies of water from first acoustic signals acquired during the scanning step and from first potential echoes.

15. The method as claimed in the preceding claim, comprising a step of locating submerged objects floating between two bodies of water comprising:

- a step (40) of determining potential positions of potential floating objects comprising, for each first potential echo, a step of determining a set of potential positions (41ij), which the corresponding potential object is likely to occupy, from the position of the sonar at the first emission instant of the first acoustic pulse at the source of the first potential echo;
- an accumulation step (50), during which fixed positions in the terrestrial coordinate system are assigned respective occupancy probabilities that correspond to probabilities of being actually occupied by an object, said respective occupancy probabilities being initialised (51) at the start of the accumulation step (50) and incremented (52ij) each time the respective fixed positions are determined as being potential positions during the step of determining potential positions;
- a step (60) of identifying effective positions effectively occupied by effective submerged objects floating between two bodies of water from fixed positions assigned an occupancy probability above a predetermined threshold.

16. The method as claimed in the preceding claim, wherein the set of potential positions of a potential object is an arc of a circle with a radius that is equal to the distance separating the potential object from the mechanical scanning sonar (2) computed on the basis of the difference between the first emission instant and the reception instant of the first potential echo emitted by the potential object, the centre of which is the position of the sonar at the first emission instant and the aperture of which is equal to the aperture of the first individual sector, the first individual sector corresponding to the sector in which the portion of the main lobe of the first acoustic pulse attenuated to a maximum of 3 dB is emitted, or is equal to the aperture of the first individual sector plus a predetermined tolerance aperture.

17. The method as claimed in any of claims 11 to 16, implemented by means of a system as claimed in any one of claims 4 to 10, comprising a step (100) of imaging the seabed at the same time as the scanning step, the step (100) of imaging the seabed consisting of imaging the seabed by means of the lateral sonar (9) by emitting second successive acoustic pulses at second successive insonification instants, and by acquiring second successive acoustic signals coming from second successive pulses, the method further comprising a step (110) of simultaneously displaying a first image representing first acoustic signals and a second image representing second acoustic signals acquired during a same acquisition period by the mechanical scanning sonar (2) and, respectively, by the lateral sonar (9).

18. The method as claimed in the preceding claim, comprising a step of classifying, by an operator by means of a classification unit, at least one first echo visible on the first image into a class taken from among a plurality of classes comprising a moored mine class and a free-floating object class.

19. The system for detecting and locating submerged underwater objects floating between two bodies of water as claimed in any one of claims 1 to 10 capable of implementing the method as claimed in any one of claims 11 to 18, comprising a computation unit (5) configured so as to implement the step of identifying first potential echoes.

20. The system as claimed in the preceding claim, dependent on claims 14 to 18, comprising a positioning unit (6) configured so as to determine the position of the carrier as a function of time, wherein the computation unit (5) is configured so as to implement the location step, the positioning unit or the computation unit being configured so as to determine the position of the mechanical scanning sonar (2).

FIG.1

FIG.2

FIG.3

FIG.5

Pour i = 1 à N

**20** { **20i** {

**21i** Pointage de la direction PA1 selon la direction pointée $P_i$

**22i** Emission d'une première impulsion acoustique $I_i$ à l'instant $t_i$

**23i** Acquisition d'un premier signal $S1_i$ résultant de la première impulsion $I_i$

**24i** Stockage de la direction pointée $P_i$ et du premier signal $S1_i$

t = 1 à N   **100t**

**100** { Emission d'une deuxième impulsion

**101t** Acquisition d'un deuxième signal

**110** Affichage

**120** Classification

i = 1 à N

**30** { **30i** {

**31i** Normalisation

**32i** Identification de premiers échos potentiels $E1_{il}$

**33i** Elimination

Pour chaque $E1_{ij}$

**40** { **41ij** Détermination d'un ensemble de positions potentielles $POp_{ij}$

**50** { 

**51** Initialisation des probabilités

**52ij** Incrémentation des probabilités

Pour chaque $E_{ij}$

**60** Identification des portions effectives

**70** Calcul des coordonnées verticales

## FIG.4

FIG.6

FIG.7

FIG.8

FIG.9

**EP 3 044 607 B1**

## RÉFÉRENCES CITÉES DANS LA DESCRIPTION

**Documents brevets cités dans la description**

- US 5506812 A
- DE 3219487
- US 4951268 A
- EP 1887383 A